# EUROPEAN PATENT SPECIFICATION

(11) **EP 1 787 903 B1**
(45) Date of publication and mention of the grant of the patent: **08.07.2009**
(21) Application number: 06022635.4
(22) Date of filing: 30.10.2006
(51) Int. Cl.: B62M 25/08, H01H 43/02

(54) **Bicycle operating component with electrical shift control switch**
Fahrradbetätigungsvorrichtung mit elektrischen Gangschaltungs-Schalter
Élément fonctionnel de bicyclette avec commutateur électrique de commande de changement de vitesse

(30) Priority: 18.11.2005 US 281892
(43) Date of publication of application: 23.05.2007
(73) Proprietor: SHIMANO INC., Osaka 590-8577 (JP)
(72) Inventor: Kazuhiro, Fujii, Sakai City Osaka 590-8577 (JP)
(74) Representative: Hofmann, Harald

(56) References cited:
- EP-A- 1 535 830
- EP-A- 1 568 597
- EP-A- 1 582 452
- EP-A- 1 588 933
- EP-A2- 1 375 325
- EP-A2- 1 391 376
- US-A- 4 143 557

## Description

### BACKGROUND OF THE INVENTION

### Field of the Invention

This invention generally relates to a bicycle operating component. More specifically, the present invention relates to a bicycle operating component with an electric shift control switch, which moves in an actuating direction from an original position to initiate both up and down shirts of a bicycle shift mechanism.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. One component that has been extensively redesigned is the bicycle shifting mechanism.

In the past, the operating force applied by the fingers to a shift control lever was transmitted to the drive component of a bicycle shifting mechanism by a cable that was fixed at one end to the control lever. More recently, electric switches mounted on the handlebar have been used instead of control levers in order to operate the bicycle shifting mechanism. For example, as shown in Japanese Laid-Open Patent Application No. 5-338581 and U.S. Patent No. 5,358,451, a plurality of electric switches may be provided to a plurality of handlebar locations in order to allow for quicker shifts and to enhance responsiveness.. However, the operation of the shifter and the operation of the brakes are often related to one another, and it is often inconvenient to move the hands around the handlebar to operate the brakes and then shift the bicycle transmission. In EP 1535 830 A, an electrical shift control switch and brake control device is provided, which discloses all the features of the preamble of claim 1. In said known control device an electrical shift control switch has a rotating or a sliding member mounted to a brake lever or a brake lever bracket. The operating member is actuated in a first actuating direction to initiate an up-shifting or in a second actuating direction to initiate a downshifting.

In view of the above, it will be apparent to those skilled in the art from this disclosure that there exists a need for an improved electrical shift control switch and an improved bicycle operating component with such an electric shift control switch. This invention addresses this need in the art as well as other needs, which will become apparent to those skilled in the art from this disclosure.

### SUMMARY OF THE INVENTION

The invention provides a bicycle operating component comprising an electrical shift control switch for a bicycle that includes a mounting portion and an operating member, and a controller. The mounting portion is configured to be coupled to a part of the bicycle. The operating member is movably coupled to the mounting portion. The operating member being arranged and configured to move relative to the mounting portion in a single actuating direction from an original position. The electrical shift control switch is arranged and configured to send electrical signals to the controller being operatively coupled to the electrical shift control switch. The controller considers a predetermined period of time to selectively operate a bicycle shift mechanism in a first direction and in a second direction opposite the first direction on the basis of the electrical signals sent by the operating member when the operating member is moved from the original position in the actuating direction.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:

Figure 1 is a side elevational view of a bicycle equipped with a pair of bicycle control devices (only one shown) in accordance with a first embodiment of the present invention;

Figure 2 is a partial enlarged front elevational view of the handlebar of the bicycle illustrated in Figure 1, with the right and left bicycle control devices mounted thereto in accordance with the present invention;

Figure 3 is an enlarged inside elevational view of the left hand side bicycle control device illustrated in Figure 2 in accordance with the present invention, with the brake lever in the normal rest (non-braking) position;

Figure 4 is a front elevational view of the left hand side bicycle control device illustrated in Figure 3 in accordance with the present invention, with the brake lever in the normal rest (non-braking) position;

Figure 5 is an enlarged front elevational view of the right hand side bicycle control device illustrated in Figures 1 and 2 in accordance with the present invention, with the brake lever in the normal rest (non-braking) position;

Figure 6 is an inside elevational view of the right hand side bicycle control device illustrated in Figure 5 in accordance with the present invention, with the brake lever in the normal rest (non-braking) position;

Figure 7 is an enlarged outside elevational view of the right hand side bicycle control device illustrated in Figures 5 and 6 in accordance with the present invention, with the brake lever in the braking position;

Figure 8 is a cross sectional view of the right hand side bicycle control device illustrated in Figures 5-7 in accordance with the present invention, as seen along section line 8-8 of Figure 5 but with the electrical shift control switch illustrated in elevation;

Figure 9 is partial cross sectional view of the right hand side bicycle control device illustrated in Figures 5-8 as seen along section line 9-9 of Figure 8;

Figure 10 is an enlarged elevational view of one of the electrical shift control switches of the right hand side bicycle control device illustrated in Figures 5-8 in accordance with the first embodiment of the present invention;

Figure 11 is a longitudinal cross sectional view of the electrical shift control switch illustrated in Figure 10 as seen along section line 11-11 of Figure 10;

Figure 12 is an elevational view (from the mounting side) of the electrical shift control switch illustrated in Figures 10 and 11, with the base removed to show the electrical shift control switch in the original position, i.e., the movable contact spaced from the stationary contact so that no electrical connection is made between the contacts;

Figure 13 is an elevational view of the electrical shift control switch illustrated in Figures 10-12 with the base removed to show the electrical shift control switch in the actuating position, i.e., the movable contact contacting the stationary contact after movement of the operating member a predetermined amount in the actuating direction so that an electrical connection is established between the contacts;

Figure 14 is an enlarged front elevational view of a right hand side bicycle control device in accordance with a second embodiment of the present invention, with the brake lever in the normal rest (non-braking) position;

Figure 15 is an inside elevational view of the right hand side bicycle control device illustrated in Figure 14 in accordance with the second embodiment of the present invention, with the brake lever in the normal rest (non-braking) position;

Figure 16 is an enlarged elevational view of one of the electrical shift control switches illustrated in Figures 14 and 15 in accordance with the second embodiment of the present invention;

Figure 17 is a longitudinal cross sectional view of the electrical shift control switch illustrated in Figure 16 as seen along section line 17-17 of Figure 16;

Figure 18 is an elevational view (from an operating member side) of the electrical shift control switch illustrated in Figures 16 and 17 with the cover and operating member removed to show the electrical shift control switch in the original position, i.e., the movable contact spaced from the stationary contact so that no electrical connection is made between the contacts;

Figure 19 is an elevational view of the electrical shift control switch illustrated in Figures 16-18 with the cover and operating member removed to show the electrical shift control switch in the first actuating (shift) position, i.e., the movable contact contacting a first section of the stationary contact so that a first electrical connection is established between the contacts;

Figure 20 is an elevational view of the electrical shift control switch illustrated in Figures 16-19 with the cover and operating member removed to show the electrical shift control switch in the second actuating (shift) position, i.e., the movable contact contacting a second section of the stationary contact so that a second electrical connection is established between the contacts;

Figure 21 is an enlarged front elevational view of a right hand side bicycle control device in accordance with a third embodiment of the present invention, with the brake lever in the normal rest (non-braking) position;

Figure 22 is an inside elevational view of the right hand side bicycle control device illustrated in Figure 21 in accordance with the third embodiment of the present invention, with the brake lever in the normal rest (non-braking) position;

Figure 23 is an enlarged elevational view (from an operating side) of the electrical shift control switch illustrated in Figures 21 and 22 in accordance with the third embodiment of the present invention;

Figure 24 is a longitudinal cross sectional view of the electrical shift control switch illustrated in Figure 23 as seen along section line 24-24 of Figure 23;

Figure 25 is an elevational view of the electrical shift control switch illustrated in Figures 23 and 24 with the cover removed to show the electrical shift control switch in the original position, i.e., the movable contact spaced from the stationary contact so that no electrical connection is made between the contacts;

Figure 26 is an elevational view of the electrical shift control switch illustrated in Figures 23-25 with the cover removed to show the electrical shift control switch in the actuating position, i.e., the movable contact contacting the stationary contact after movement of the operating member a predetermined amount in the actuating direction so that an electrical connection is established between the contacts;

Figure 27 is an enlarged front elevational view of a right hand side bicycle control device in accordance with a fourth embodiment of the present invention, with the brake lever in the normal rest (non-braking) position;

Figure 28 is an inside elevational view of the right hand side bicycle control device illustrated in Figure 27 in accordance with the fourth embodiment of the present invention, with the brake lever in the normal rest (non-braking) position;

Figure 29 is an enlarged elevational view of the electrical shift control switch illustrated in Figures 27 and 28 with portions broken away and portions diagrammatically illustrated in order to show the electrical shift control switch in the original position, i.e., the movable contact spaced from the stationary contact so that no electrical connection is made between the contacts;

Figure 30 is an enlarged elevational view of the electrical shift control switch illustrated in Figures 27 and 28 with portions broken away and portions diagrammatically illustrated in order to show the electrical shift control switch in the first actuating (shift) position, i.e., the movable contact contacting a first section of the stationary contact so that a first electrical connection is established between the contacts;

Figure 31 is an enlarged elevational view of the electrical shift control switch illustrated in Figures 27 and 28 with portions broken away and portions diagrammatically illustrated in order to show the electrical shift control switch in the second actuating (shift) position, i.e., the movable contact contacting a second section of the stationary contact so that a second electrical connection is established between the contacts;

Figure 32 is an enlarged front elevational view of a right hand side bicycle control device in accordance with a fifth embodiment of the present invention, with the brake lever in the normal rest (non-braking) position;

Figure 33 is an inside elevational view of the right hand side bicycle control device illustrated in Figure 32 in accordance with the fifth embodiment of the present invention, with the brake lever in the normal rest (non-braking) position;

Figure 34 is an elevational view of the electrical shift control switch illustrated in Figures 32 and 33 with portions broken away and portions diagrammatically illustrated in order to show the electrical shift control switch in the original position, i.e., the movable contact spaced from the stationary contact so that no electrical connection is made between the contacts;

Figure 35 is an elevational view of the electrical shift control switch illustrated in Figures 32 and 33 with portions broken away and portions diagrammatically illustrated in order to show the electrical shift control switch in the first actuating (shift) position, i.e., the movable contact contacting a first section of the stationary contact so that a first electrical connection is established between the contacts;

Figure 36 is an elevational view of the electrical shift control switch illustrated in Figures 32 and 33 with portions broken away and portions diagrammatically illustrated in order to show the electrical shift control switch in the second actuating (shift) position, i.e., the movable contact contacting a second section of the stationary contact so that a second electrical connection is established between the contacts;

Figure 37 is an enlarged front elevational view of a right hand side bicycle control device in accordance with a sixth embodiment of the present invention, with the brake lever in the normal rest (non-braking) position;

Figure 38 is an inside elevational view of the right hand side bicycle control device illustrated in Figure 37 in accordance with the sixth embodiment of the present invention, with the brake lever in the normal rest (non-braking) position;

Figure 39 is an elevational view of the electrical shift control switch illustrated in Figures 37 and 38 with portions broken away and portions diagrammatically illustrated in order to show the electrical shift control switch in the original position, i.e., the movable contact spaced from the stationary contact so that no electrical connection is made between the contacts;

Figure 40 is an elevational view of the electrical shift control switch illustrated in Figures 37 and 38 with portions broken away and portions diagrammatically illustrated in order to show the electrical shift control switch in the first actuating (shift) position, i.e., the movable contact contacting a first section of the stationary contact so that a first electrical connection is established between the contacts; and

Figure 41 is an elevational view of the electrical shift control switch illustrated in Figures 37 and 38 with portions broken away and portions diagrammatically illustrated in order to show the electrical shift control switch in the second actuating (shift) position, i.e., the movable contact contacting a second section of the stationary contact so that a second electrical connection is established between the contacts.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims.

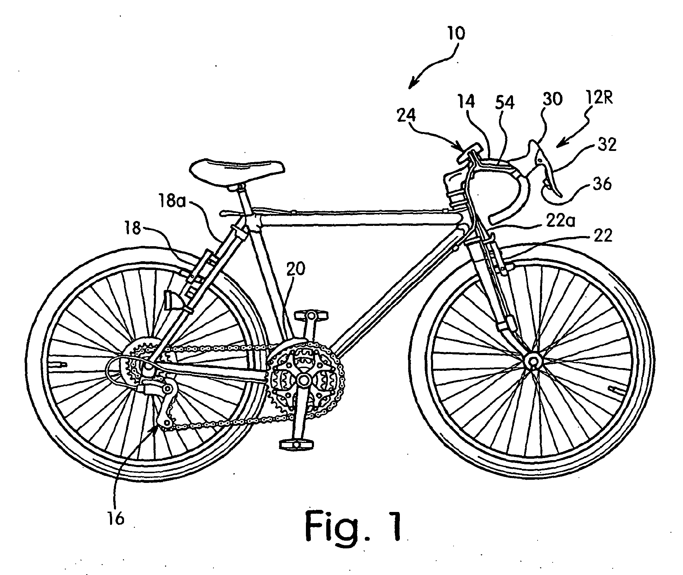

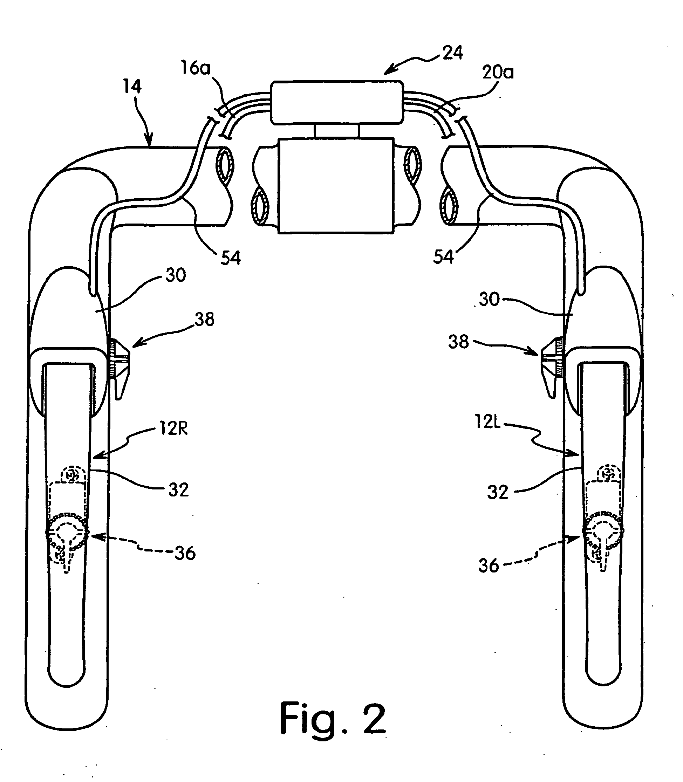

Referring initially to Figures 1 and 2, a bicycle 10 is illustrated with a pair of bicycle control devices 12R and 12L (only one shown in Figure 1) mounted on a bicycle handlebar 14 in accordance with a first embodiment of the present invention. The right and left hand side control devices 12R and 12L are integrated electrical shift control and mechanical brake control devices. The right and left hand side bicycle control devices 12R and 12L are essentially identical in construction and operation, except that that are mirror images. Thus, only one of the control devices 12R and 12L (i.e. the control device 12R) will be discussed and illustrated herein. Moreover, the parts of right and left hand side control devices 12R and 12L that are identical or mirror images will be given the same reference numerals for the sake of brevity.

Also, since most of the parts of the bicycle 10 are well known in the art, most of the parts of the bicycle 10 will not be discussed or illustrated in detail herein, except for the parts relating to the control devices 12R and 12L of the present invention. However, it will be apparent to those skilled in the art from this disclosure that various conventional bicycle parts, which are not illustrated and/or discussed in detail herein, can also be used in conjunction with the present invention.

The right hand side control device 12R is operatively coupled to a rear bicycle shift mechanism (e.g. a rear derailleur) 16 via a controller or cycle computer 24, while the left hand side control device 12L is operatively coupled to a front bicycle shift mechanism (e.g. front derailleur) 20 via the controller 24. Also, the right hand side control device 12R is directly coupled to a rear braking device 18 via a brake cable 18a, while the left hand side control device 12L is directly coupled to a front braking device 22 via a brake cable 22a.

The bicycle control devices 12R and 12L together with the controller 24 form right and left hand side bicycle brake/shift operating components of a brake/shift control system or mechanism that is configured and arranged to be fixedly coupled to the bicycle handlebar 14 to control gear shifting and braking of the bicycle 10. Basically, each of the bicycle control devices 12R and 12L comprises a support member or brake lever bracket 30, a brake lever 32, a brake lever biasing member 34, a first electrical shift control switch 36 and a second electrical shift control switch 38. Each of the electrical shift control switches 36 and 38 is preferably configured and arranged to be moved in an actuating direction from an original position to an actuating position to initiate both up and down shifts (i.e. lateral movement in opposite lateral directions relative to the bicycle 10 in a conventional manner) of one of the rear and front bicycle shift mechanisms 16 and 20 in accordance with the present invention, as explained below.

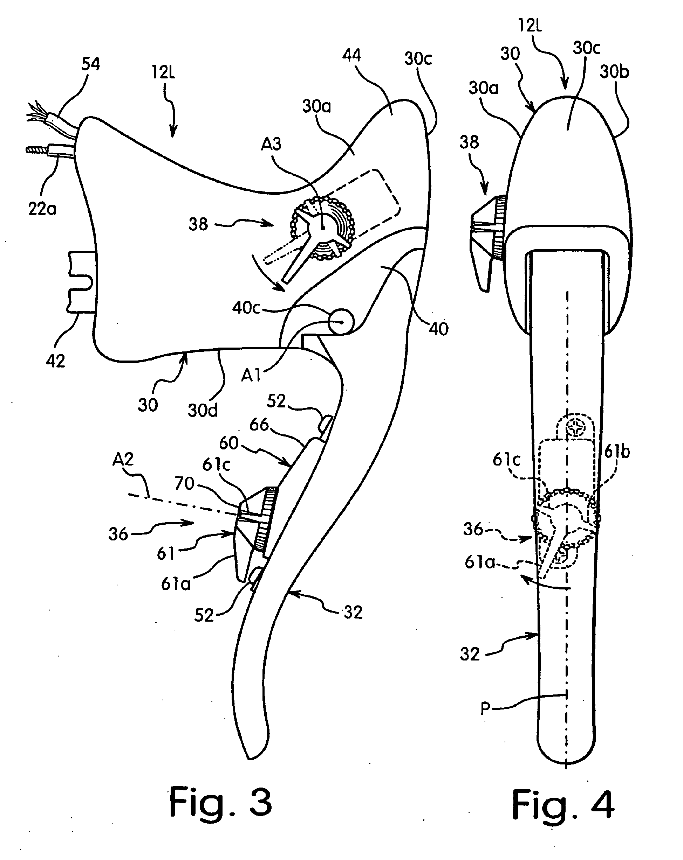

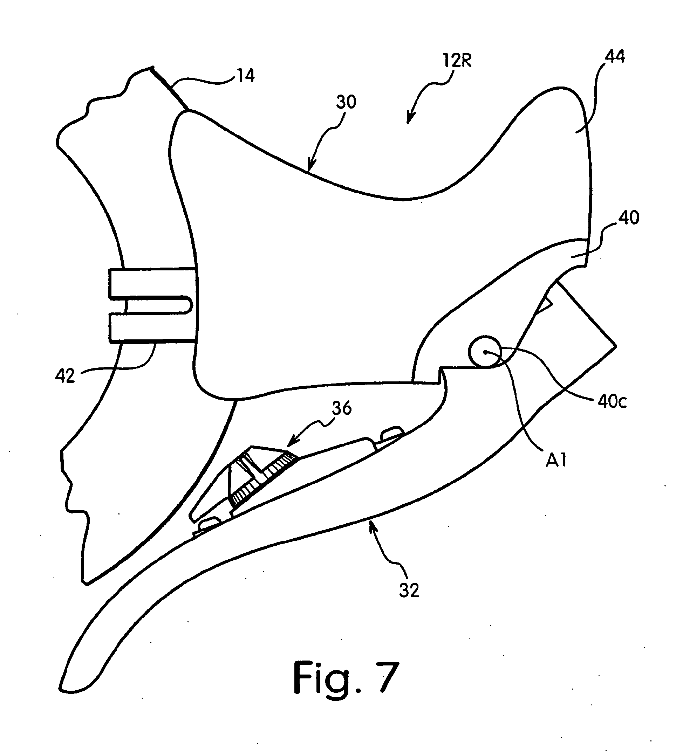

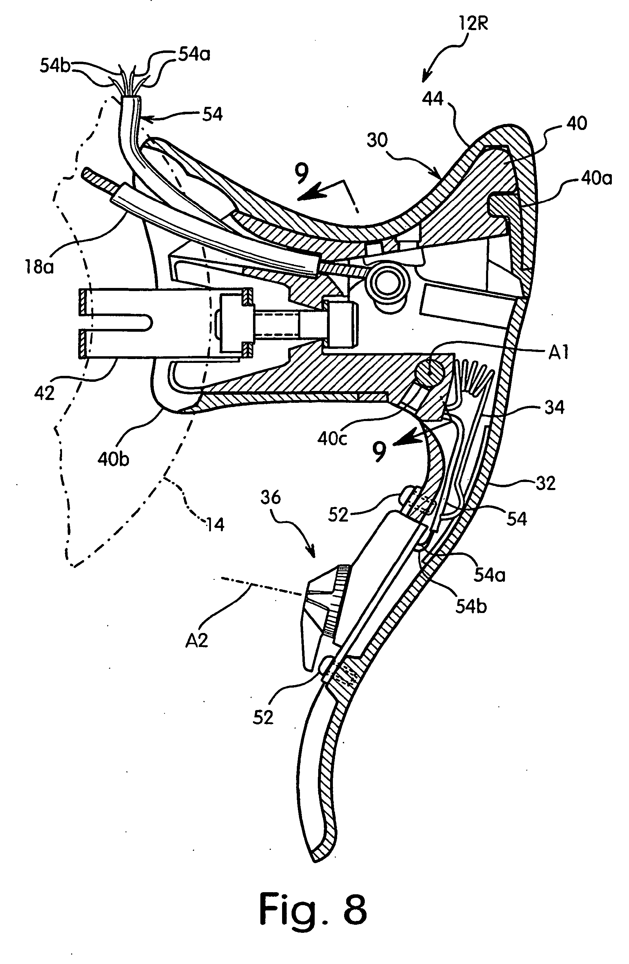

Referring to Figures 3-9, the brake lever bracket 30 has an inner side wall 30a, an outer side wall 30b, a front wall 30c and a bottom wall 30d. The brake lever bracket 30 basically comprises a rigid support or gripping body 40, a band or tube clamp 42 and an outer bracket cover 44 as best seen in Figure 8. The gripping body 40 is configured and arranged to be fixedly coupled to the bicycle handlebar 14 by the band clamp 42 in a relatively conventional manner. Of course, it will be apparent to those skilled in the art from this disclosure that other mounting mechanisms can be used if needed and/or desired. The gripping body 40 is configured as a box-shaped bracket that facilitates gripping by the rider. The gripping body 40 includes a distal end portion 40a and a mounting end portion 40b.

The mounting end 40b is configured and arranged to be coupled to the bicycle handlebar 14, while the distal end portion 40a is longitudinally spaced from the mounting end portion 40b. The mounting end portion 40b has the band clamp 42 secured to the bicycle handlebar 14. The distal end portion 40a of the gripping body 40 pivotally supports the brake lever 32 to the gripping body 40 by a pivot pin 40c about a rotational operating axis or brake pivot axis A1. In the control device 12R, as seen in Figure 8, the brake cable 18a is fixedly coupled to the brake lever 32 such that the inner wire is pulled when the rider squeezes the brake lever 32. Likewise, the brake cable 22a is fixedly coupled to the brake lever 32 of the control device 12L such that the inner wire is pulled when the rider squeezes the brake lever 32.

The outer bracket cover 44 is disposed over a majority of the exterior surface of the gripping body 40. The outer bracket cover 44 overlies most of the second electrical shift control switch 38. Preferably, the outer bracket cover 44 is constructed of a resilient synthetic material.

The brake lever biasing member 34 is preferably a spring that is mounted between the brake lever 32 and the gripping body 40 to urge the brake lever 32 from a braking position to a normal rest (non-braking) position. In particular, the brake lever 32 is basically pivoted about the brake pivot axis A1 by the rider pulling or squeezing the brake lever 32 toward the handlebar 14 along a brake operating plane P against the biasing force of the brake lever biasing member 34 such that the inner wire of the brake cable 18a or 22a is pulled.

The first electrical shift control switch 36 is fixedly coupled to a lower intermediate portion of the brake lever 32 via a pair of screws 52. Thus, the first electrical shift control switch 36 moves with the brake lever 32 when the brake lever 32 is pivoted about the brake pivot axis A1 from the rest position to the braking position and back to the rest position along the brake operating plane P. Preferably, the first electrical shift control switch 36 is mounted to the rearwardly facing surface of the brake lever 32 such that the rider can operate the first electrical shift control switch 36 using a thumb or finger. In the illustrated embodiment, the lateral width of the first electrical shift control switch 36 is less than or substantially equal to the width of the brake lever 32 such that the first electrical shift control switch 36 is not visible when viewed from the front of the bicycle 10. This arrangement protects the first electrical shift control switch 36 in the event that the bicycle 10 should fall over on its side.

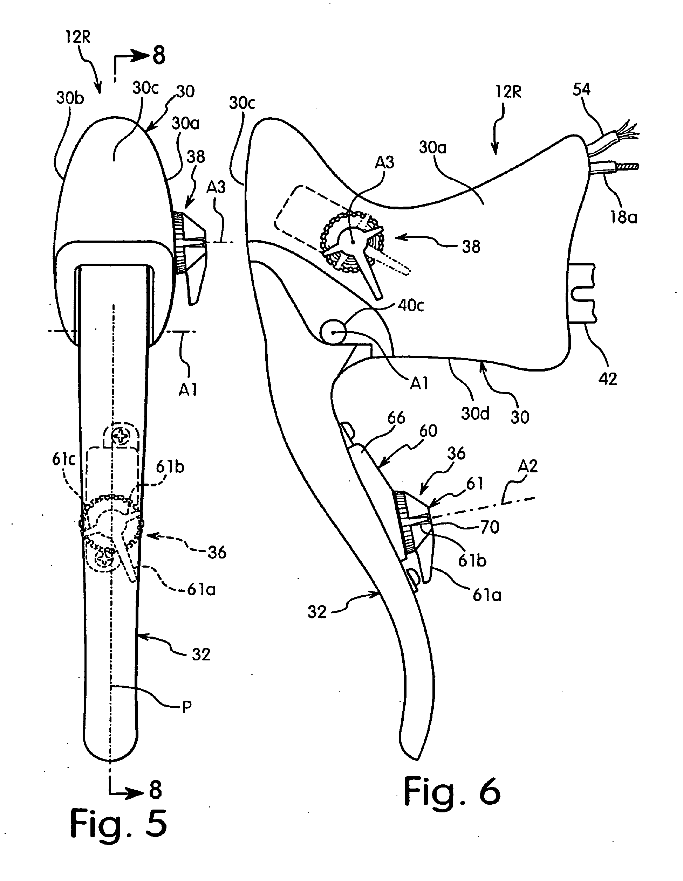

The first electrical shift control switch 36 mounted to the brake lever 32 of the right hand side bicycle control device 12R moves from the original position shown in Figures 2 and 6 in the actuating direction to the actuating position shown in Figure 5. Similarly, the first electrical shift control switch 36 mounted to the brake lever 32 of the left hand side bicycle control device 12L moves from the original position shown in Figures 2 and 3 in the actuating direction to the actuating position shown in Figure 4. In other words, the switches 36 mounted to opposite side bicycle control devices 12R/12L rotate in opposite actuating directions from identical original positions (i.e. operate along mirror image operating paths or strokes substantially toward each other). Each of the switches 36 moves in a single (i.e. only one) actuating direction from its original position. The original positions can also be considered non-actuating, neutral or rest positions since no electrical connection is made in these positions and the switches are normally stationary (at rest) in these positions.

As best seen in Figures 2, 3 and 6, the second electrical shift control switch 38 is fixedly coupled to an inner side wall of the brake lever bracket 30. Preferably, a part of the gripping body 40 of the brake lever bracket 30 is integrally formed with the second electrical shift control switch 38. This arrangement protects the second electrical shift control switch 38 in the event that the bicycle 10 should fall over on its side. The second electrical shift control switch 38 is arranged and configured such that the rider can operate the second electrical shift control switch 38 using a thumb or finger depending on hand position.

The second electrical shift control switch 38 mounted to the brake lever bracket 30 of the right hand side bicycle control device 12R moves from the original position shown in Figures 2, 5 and 6 (broken lines in Figure 6) in the actuating direction to the actuating position shown in Figure 6. Similarly, the second electrical shift control switch 38 mounted to the brake lever bracket 30 of the left hand side bicycle control device 12L moves from the original position shown in Figures 2, 3 and 4 (broken lines in Figure 3) in the actuating direction to the actuating position shown in Figure 3. In other words, the switches 38 mounted to opposite side bicycle control devices 12R/12L rotate in opposite actuating directions from identical original positions (i.e. operate along mirror image operating paths or strokes substantially downwardly). E of the switches 38 moves in a single (i.e. only one) actuating direction from its original position. The original positions can also be considered non-actuating, neutral or rest positions since no electrical connection is made in these positions and the switches are normally stationary (at rest) in these positions.

As best seen in Figure 2, the controller or cycle computer 24 is electrically coupled to the first and second electrical shift control switches 36 and 38 of each of the control devices 12R and 12L via a pair of electrical cords 54. The controller 24 is also operatively coupled to the rear and front bicycle shift mechanisms 16 and 20 to control shifting/movement of the rear and front bicycle shift mechanisms 16 and 20 in a conventional manner. For example, the rear and front bicycle shift mechanisms 16 and 20 can be conventional electronically controlled, motorized derailleurs that are electrically coupled to the controller 24 via cords 16a and 20a, respectively. In any case, once the controller 24 determines if an up shift or down shift of the rear or front bicycle shift mechanism 16 or 20 is desired in accordance with the present invention, the shifting of the rear and front bicycle shift mechanisms 16 and 20 is initiated by the controller 24 to be carried out in a conventional manner. Thus, each of the electrical shift control switches 36 and 38 is arranged and configured to operate a bicycle shift mechanism 16 or 20 in a first direction when moved from the original position in the actuating direction, and in a second direction opposite to the first direction when moved from the original position in the actuating direction.

In particular, as seen in Figures 8, 12 and 13, each of the electrical cords 54 has a pair of first electrical conductors 54a and a pair of second electrical conductors 54b. One of the first electrical conductors 54a and one of the second electrical conductors 54b are electrically coupled to each of the first and second electrical shift control switches 36 and 38. When one of the first conductors 54a is electrically connected to one of the second electrical conductors 54b, then an electrical shift signal is transmitted to the controller 24. The controller 24 is configured and arranged to actuate the appropriate bicycle shift mechanism 16 or 20 to selectively initiate an up shift or a down shift depending on which of the bicycle control devices 12R or 12L sends the electrical shift signal and depending on how long a period of time that the electrical shift signal is sent, as explained below in more detail. In other words, the controller 24 is basically conventional, except that the controller 24 is programmed to actuate the rear bicycle shift mechanism 16 in two directions based on a single electrical signal received from the control device 12R, and programmed to actuate the front bicycle shift mechanism 16 in two directions based on a single electrical signal received from the control device 12L.

The controller 24 preferably includes a microcomputer or central processing unit (CPU), input/output circuits (I/O interface), and storage devices such as a ROM (Read Only Memory) device and a RAM (Random Access Memory) device. The microcomputer of the controller 12 is programmed to control the bicycle shift mechanisms 16 and 20 based on the electrical signals received from the switches 36 and 38. Specifically, the memory devices store the programming (control logic) as well store various information such as current shift position. The controller 24 is operatively (e.g. electrically) coupled to the switches 36 and the switches 38 using the cords 54. The controller 24 is further operatively (e.g. electrically) coupled to the bicycle shift mechanisms 16 and 20 in a conventional manner using a pair of electrical cords 16a and 20a. The controller 24 is capable of selectively controlling the bicycle shift mechanisms 16 and 20 using the control logic. It will be apparent to those skilled in the art from this disclosure that the precise structure and algorithms for the controller 24 can be any combination of hardware and software known in the art that will carry out the functions of the present invention.

In this embodiment, the controller 24 is programmed such that when an electrical signal is received from either of the switches 36 or 38 of the bicycle control device 12R for less than a predetermined period time (e.g. one second), the controller 24 initiates an up shift of the rear bicycle shift mechanism 16. On the other hand, if the controller 24 receives an electrical signal from either of the switches 36 or 38 of the bicycle control device 12R for at least the predetermined period time (e.g. for at least one second), the controller 24 initiates a down shift of the rear bicycle shift mechanism 16. Likewise, the controller 24 is programmed such that when an electrical signal is received from either of the switches 36 or 38 of the bicycle control device 12L for less than a predetermined period time (e.g. one second), the controller 24 initiates an up shift of the front bicycle shift mechanism 20. On the other hand, if the controller 24 receives an electrical signal from either of the switches 36 or 38 of the bicycle control device 12L for at least the predetermined period time (e.g. for at least one second), the controller 24 initiates a down shift of the front bicycle shift mechanism 20.

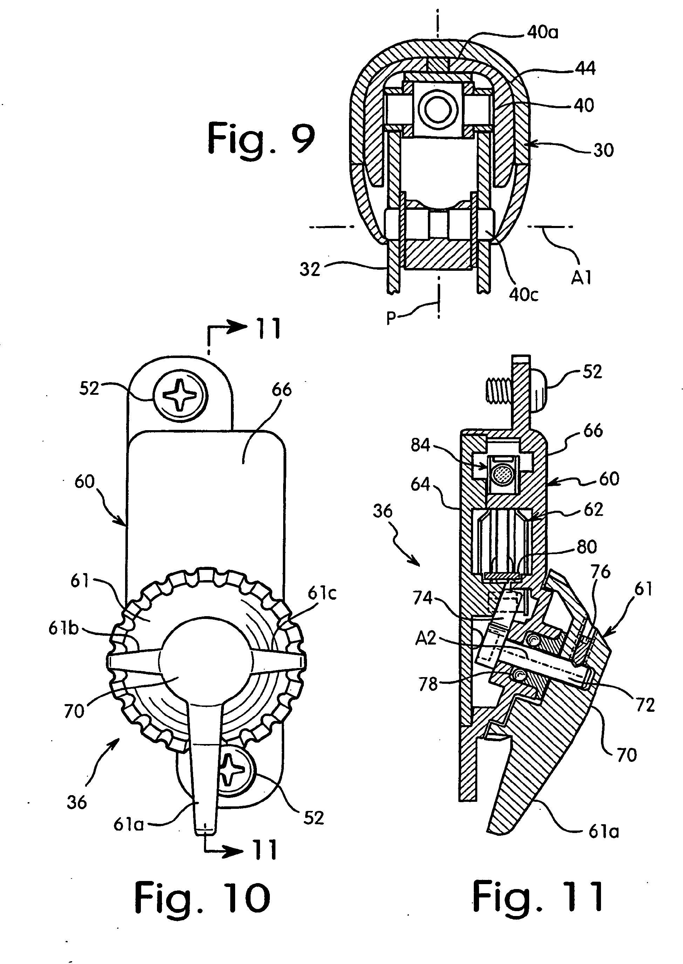

Referring now to Figures 10-13, the first electrical control switches 36 will now be explained in more detail. The electrical shift control switch 36 of the right hand side control device 12R is illustrated in Figures 10-13, while the first electrical shift control switch 36 of the left hand side control device 12L is not illustrated and/or discussed in detail herein for the sake of brevity. The first electrical shift control switch 36 of the left hand side control device 12L is merely a mirror image of the first electrical shift control switch 36 of the right hand side control device 12R, as mentioned above.

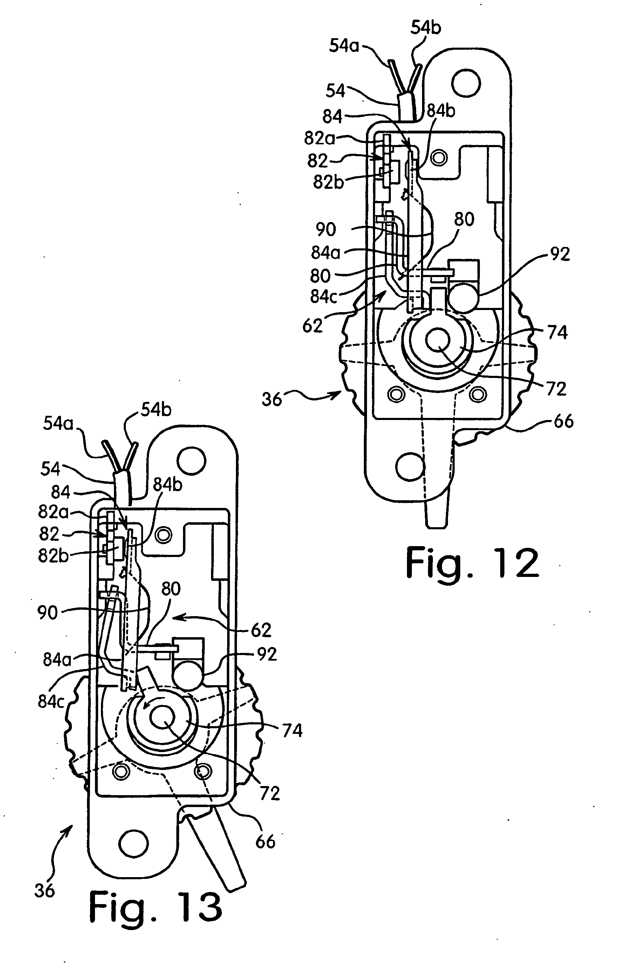

The following description refers to the first electrical shift control switch 36 of the right hand side control device 12R. This first electrical shift control switch 36 basically includes a housing or mounting portion 60, an operating member 61 and an electrical contact assembly 62. The operating member 61 is rotatably coupled to the housing 60 and operatively coupled to the electrical contact assembly 62. The electrical contact assembly 62 is mounted within the housing 60 and configured and arranged to be operated by the operating member 61. As explained below in more detail, the first electrical shift control switch 36 has an original position and an actuating position. The original position corresponds to a neutral or rest position shown in Figure 12, while the actuating position corresponds to a shift signal sending position shown in Figure 13. The operating member 61 is moved in a rotational actuating direction (i.e. counterclockwise as viewed in Figures 12 and 13) from the original position to the actuating position.

The first electrical shift control switch 36 of the right side control device 12R can be utilized for both upshifting and downshifting of the bicycle shift mechanism 16 depending on how long the operating member 61 is held in the actuating position shown in Figure 13. For instance, if the operating member 61 is held in the actuating position for less than a predetermined period of time (e.g. one second), the controller 24 will initiate an up shift (i.e. lateral movement in a first lateral direction) of the bicycle shift mechanism 16 in a conventional manner. However, if the operating member 61 is held in the actuating position for at least the predetermined period of time (e.g. at least one second), the controller 24 will initiate a down shift (i.e. lateral movement in a second lateral direction opposite to the first direction) of the rear bicycle shift mechanism 16 in a conventional manner. The switch 38 of the right hand side control device 12R controls shifting of the rear bicycle shift mechanism 16 in an identical manner. Likewise, the switches 36 and 38 of the left hand side control device 12L control shifting of the front bicycle shift mechanism 20 in an identical manner, except the operating members 61 of these switches 26 and 38 move along mirror image paths.

Preferably, the housing 60 is constructed of two pieces. For example, the housing 60 as illustrated, includes a base 64 and a cover 66 that is fixedly coupled to the base 64. The base 64 and cover 66 are preferably constructed of a lightweight, hard rigid material such as a hard rigid plastic material. The electrical contact assembly 62 is housed within the housing 60 between the base 64 and the cover 66 and is electrically coupled to the electrical conductors 54a and 54b of the electrical cord 54.

The operating member 61 protrudes out from the cover 66 of the housing 60 such that rotational movement of the operating member 61 causes the electrical contact assembly 62 to move from a normal or rest position to an actuating position as explained below. The operating member 61 basically has a knob or dial 70, a pivot shaft 72 and a toggle member 74. The knob 70 is fixedly attached the outer end of the pivot shaft 72 by a set pin 76 that contacts a flat portion of the outer end of the pivot shaft 72. The inner end of the pivot shaft 72 has the toggle member 74 fixedly coupled thereto. Thus, rotation of the knob 70 by the rider causes the pivot shaft 72 and the toggle member 74 to rotate therewith.

Preferably, a bearing assembly 78 is positioned between the cover 66 and the pivot shaft 72 such that the operating member 61 pivots or rotates smoothly about a rotational operating axis or pivot axis A2. Preferably, the rotational operating axis A2 of the operating member 61 is parallel to the braking plane P. In this embodiment, the rotational operating axis A2 lies in the brake lever operating plane P of the brake lever 32. Thus, the rotational operating axis A2 of the operating member 61 is substantially perpendicular or orthogonally arranged relative to the brake pivot axis A1. The operating member 61 includes a first or primary actuating protrusion 61a arranged at a first angular location relative to the rotational operating axis A2, and a pair of secondary actuating protrusions 61b and 61c arranged at second and third angular locations relative to the rotational operating axis A2 that are spaced from the first angular location of the first actuating protrusion 61 a.

As seen in Figure 12 and 13, the electrical contact assembly 62 preferably includes a contact bar 80, a stationary contact 82, a movable contact 84, a biasing element 90 and a stop member 92. The biasing element 90 is preferably formed of a leaf spring. Generally, when the first electrical shift control switch 36 is in an original position, the toggle member 74 of the operating member 61 is located centrally between the movable contact 84 and the stop member 92. In particular, the biasing element 90 biases the toggle member 74 of the operating member 61 in a direction opposite to the actuating direction such that the toggle member 74 contacts the stop member 92. However, when the rider rotates the knob 70 of the operating member 61 in the actuating direction, this causes the pivot shaft 72 to pivot the toggle member 74 against the movable contact 84. The housing 60 acts as an additional stop member in the actuating position to prevent further movement of the actuating member 61 in the actuating direction. The pivotal movement of the toggle member 74 causes the movable contact 84 to be deflected such that the deflected movable contact 84 directly contacts the stationary contact 82. Thus, an electrical connection is made between the stationary contact 82 and the movable contact 84 such that an electrical shift control signal is sent to the controller 24. The controller 24 in turn operates one of the bicycle shift mechanisms 16 and 20 depending on which of the control devices 12R or 12L the switch 36 is mounted to in order to cause a shift to occur based on the logic discussed above. In this embodiment, the operating member 61 is arranged and configured to move along substantially the same stroke to initiate both up and down shifts.

As mentioned above, the controller 24 is electrically coupled to the first electrical shift control switch 36 via the electrical cord 54. In particular, the first electrical conductor 54a of the electrical cord 54 is electrically connected to the contact bar 80. The second electrical conductor 54b of the electrical cord 54 is electrically connected to the stationary contact 82. When the contacts 82 and 84 are touching, the first conductor 54a is electrically connected to the second electrical conductor 54b via the contact bar 80 to transmit an electrical shift control signal to the controller 24.

Basically, the stationary contact 82 includes a wiring plate 82a and a contact element 82b with a stationary engagement surface. The stationary contact 82 is constructed of a rigid electrical conductive material such as those known in the art. The stationary contact 82 is fixedly secured to the housing 60 when the base 64 and the cover 66 are fixedly coupled together. The second electrical conductor 54b of the electrical cord 54 is electrically connected to the stationary contact 82 by soldering or otherwise attaching the conductor to the wiring plate 82a.

The movable contact 84 includes a first mounting element 84a with a contact element 84b mounted on one end of the first mounting element 84a, and a second mounting element 84c coupled to the other end of the first mounting element 84a. The elements 84a-84c of the movable contact 84 are constructed of rigid electrical conductive materials such that an electrical path is created by these elements. The first mounting element 84a is swingably mounted to the contact bar 80 and the second mounting element 84c such that the first mounting element 84a moves between a normal or rest position and an actuating position in response to rotation of the knob 70 of the operating member 61. Thus, the contact element 84b has a movable engagement surface that is arranged and configured to move with the first mounting element 84a when the operating member 61 is operated. In other words, the movable engagement surface of the contact element 84b of the movable contact 84 selectively moves into electrical engagement with the stationary engagement surface of the contact element 82b of the first stationary contact 82 upon rotation of the knob 70 of the operating member 61 to the actuating position.

The second mounting element 84c is coupled between the contact bar 80 and the free end of the first mounting element 84a to control the swinging or pivotal movement of the first mounting element 84a. Thus, the second mounting element 84c is pivotally mounted at its first end to the contact bar 80 and at its second end to the first mounting element 84a. The biasing element 90 is coupled between the contact bar 80 and the first mounting element 84a such that the first and second mounting elements 84a and 84c urge the toggle member 74 of the operating member 61 to the original position and the contact element 84b out of engagement with the stationary contact element 82b.

This arrangement of the biasing member (leaf spring) 90 together with the contact element 82b and the first and second mounting elements 84a and 84c form parts of an audible clicking structure that is configured and arranged to produce an audible sound upon selective movement of the operating member 61 to the actuating position. In other words, an audible clicking sound occurs simultaneous with the movable engagement surface of the contact element 84b engaging the stationary engagement surface of the contact element 82b.

The second electrical shift control switch 38 is fixedly coupled to the inner side wall of the brake lever bracket 30, as mentioned above. The second electrical shift control switch 38 is either identical to the first electrical shift control switch 36 or the housing of the second electrical shift control switch 38 is modified to provide a more integrated housing control switch. Preferably, the gripping body 40 of the brake lever bracket 30 forms a part of the housing of the second electrical shift control switch 38. Thus, other than the possible modification to the housing of the second electrical shift control switch 38, the first and second electrical shift control switches 36 and 38 of the right hand side control device 12R operate in an identical manner. Like wise, the switches 36 and 38 of the left hand side control device 12L are identical except optionally, their housings 60 may differ. Of course, the second electrical shift control switches 38 have rotational operating axes or pivot axes A3 oriented to be substantially parallel the brake pivot axis A1 of the brake lever 32.

### SECOND EMBODIMENT

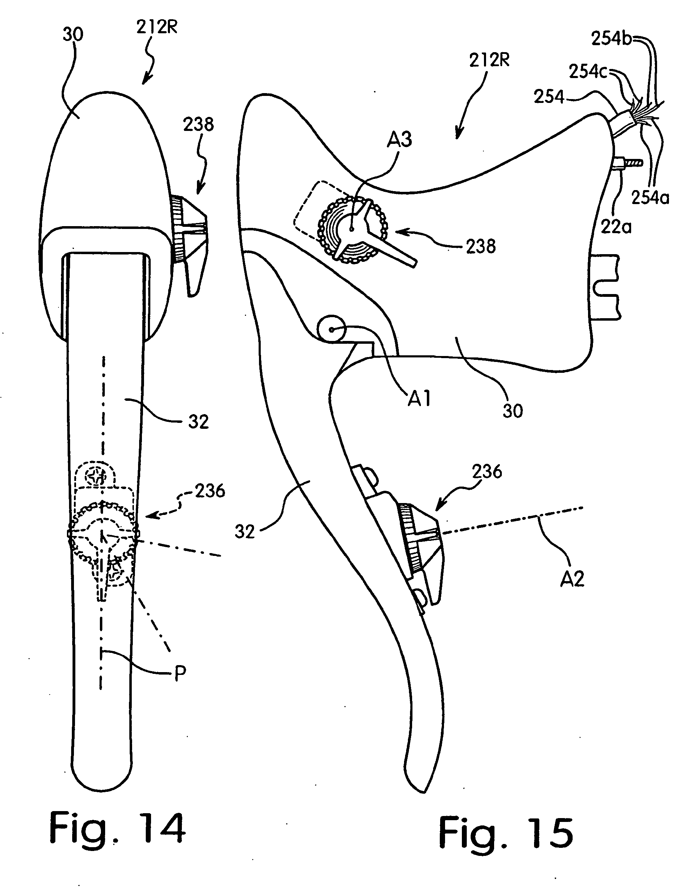

Referring now to Figures 14-20, a right hand side electrical shift and brake control devices 212R will now be explained that is mounted to the bicycle handlebar 14 in accordance with a second embodiment of the present invention. A left hand side control device (not shown) is also provided that is essentially identical in construction and operation to the right hand side electrical shift and brake control device 212R, except that they are mirror images. Thus, only the control device 212R will be discussed and illustrated herein.

Basically, the control device 212R is identical to the device 12R of the first embodiment, except that that the electrical shift control switches 36 and 38 of the first embodiment have been replaced with a pair of electrical shift control switches 236 and 238 in accordance with the second embodiment. Accordingly, some of the parts of the second embodiment that are identical or substantially identical will be given the same reference numerals as those used to explain the first embodiment for the sake of brevity.

The electrical shift control switches 236 and 238 in accordance with the second embodiment will now be explained as being installed on the brake lever 32 and the brake lever bracket 30, respectively. In view of the similarity between the first and second embodiments, the descriptions of the parts of the second embodiment that are identical to the parts of the first embodiment may be omitted for the sake of brevity. However, it will be apparent to those skilled in the art from this disclosure that the descriptions and illustrations of the first embodiment also apply to this second embodiment, except as explained and illustrated herein.

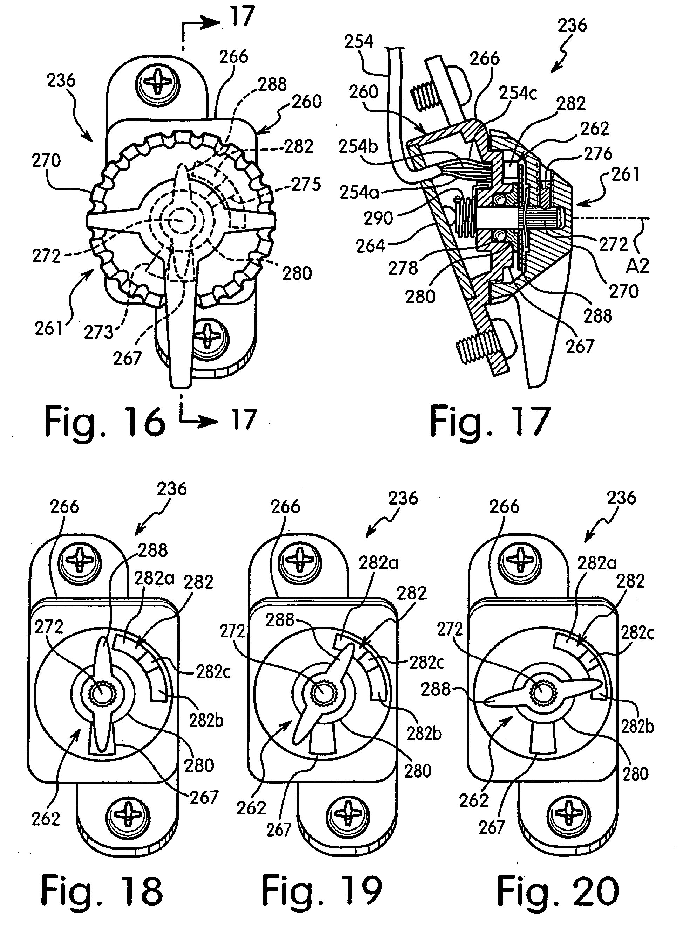

Basically, the electrical shift control switch 236 includes a housing or mounting portion 260, an operating member 261 and an electrical contact assembly 262. The operating member 261 is rotatably coupled to the housing 260 and operatively coupled to the electrical contact assembly 262. The electrical contact assembly 262 is mounted between the housing 260 and the operating member 261. The electrical contact assembly 262 is configured and arranged to be operated by the operating member 261. As explained below in more detail, the electrical shift control switch 236 has an original position, a first actuating position and a second actuating position. The original position (Figures 16-18) can be considered non-actuating, neutral or rest position since no electrical connection is made in this position and the switch is normally stationary (at rest) in this position. Similar to the first embodiment, the switch 236 preferably moves in a single actuating direction from the original position to the first actuating position (Figure 19) and also in the single actuating direction from the original position to the second actuating position (Figure 20). However, in this embodiment, different electrical shift signals are sent from the switch 236 when located in the first and second actuating positions, as explained below in more detail. In any case, the electrical shift control switch 236 can be utilized for both upshifting and downshifting the bicycle shift mechanism 16 by moving the switch 236 in the single actuating direction. In particular, in this embodiment, the controller 24 is programmed to initiate an up shift of the bicycle shift mechanism 16 when only a first electrical shift control signal is received within a predetermined period of time (e.g. one second), and the controller 24 is programmed to initiate a down shift of the bicycle shift mechanism 16 when a second electrical shift control signal is received within the predetermined period of time (e.g. one second), as explained below in more detail.

Preferably, the housing 260 is constructed of two pieces. For example, the housing 260 as illustrated, includes a base 264 and a cover 266 that is fixedly coupled to the base 264. The base 264 and cover 266 are preferably constructed of a hard rigid material such as a hard rigid plastic material. The electrical contact assembly 262 is housed within the housing 260 between the base 264 and the cover 266. The electrical contact assembly 262 is electrically coupled to one set of the electrical conductors 254a, 254b and 254c of a modified electrical cord 254. This cord 254 has a total of six electrical leads rather than the four leads of the cord 54 of the first embodiment.

The operating member 261 protrudes out from the cover 266 of the housing 260 such that rotational movement of the operating member 261 causes the electrical contact assembly 262 to move the original position to one of the two actuating positions as explained below. The operating member 261 basically has a knob or dial 270 that is fixedly attached an outer end of a pivot shaft 272 by a set pin 276 that contacts a flat portion of the outer end of the pivot shaft 272. The inner end of the pivot shaft 272 is secured to the cover 266, and is operatively coupled to the electrical contact assembly 262. Thus, rotation of the knob 270 by the rider causes the pivot shaft 272 to rotate therewith. Preferably, a bearing assembly 278 is positioned between the cover 266 and the pivot shaft 272 such that the operating member 261 pivots or rotates smoothly about the rotational operating axis A2.

The electrical contact assembly 262 preferably includes a common stationary contact 280, a stationary contact 282, a movable contact 288 and a biasing element 290 formed of a torsion spring mounted on the pivot shaft 272. In this embodiment, the common stationary contact 280 and the stationary contact 282 are fixed to the cover 266 and arranged about the pivot shaft 272. The movable contact 288, on the other hand, is fixed to the pivot shaft 272 to rotate or pivot therewith. Generally, when the first electrical shift control switch 236 is in the original position, the movable contact 288 is located centrally and substantially vertically as best seen in Figures 16 and 18.

The biasing element 290 biases the operating member 261 in a direction opposite to the actuating direction. A projection (a first moving stop member) 273 of the knob 270 of the operating member 261 contacts a stop member 267 that is fixedly coupled to the cover 266 at the original position to prevent movement of the actuating member 261 in the direction opposite to the actuating direction. Another projection (a second moving stop member) 275 of the knob 270 operating member 261 contacts the stop member 267 after the actuating member 261 has moved a predetermined amount in the actuating direction (i.e. at the second actuating position). Thus, the abutment or stop member 267 selectively contacts one of two abutments 273 and 275 that are formed on the knob 270 to limit rotation of the knob 270.

When the rider rotates the knob 270 of the operating member 261 in the actuating direction, this causes the pivot shaft 272 to pivot the movable contact 288 to slide into electrical engagement with the stationary contact 282. This movement of the movable contact 288 causes any oxidation or other contaminants to be wiped off of the contact or engagement surfaces of the stationary contact 282 and the movable contact 288. More specifically, the stationary contact includes a first engagement section 282a, a second engagement section 282b and a non-conductive section 282c arranged between the first and second engagement sections 282a and 282b. When the knob 270 of the operating member 261 is rotated in the actuating direction from the original position, the movable contact 288 first slides into contact with the first engagement section 282a (i.e. at the first actuating position) as shown in Figure 19. If the operating member 261 is further rotated in the actuating direction from the first actuating position, the movable contact 288 will move past the nonconductive section 282c and slide into contact with the second engagement section 282b (i.e. the second actuating position) shown in Figure 20.

An electrical connection is made between the stationary contact 282 and the movable contact 288 such that electrical shift control signals are sent to the controller 24 in accordance with the present invention, which in turn operates the bicycle shift mechanism 16. In particular, the first electrical conductor 254a of the electrical cord 254 is electrically connected to the common stationary contact 280, and thus, connected to the movable contact 288. The second electrical conductor 254b of the electrical cord 254 is electrically connected to the first engagement section 282a of the stationary contact 282, while the third electrical conductor 254c of the electrical cord 254 is electrically connected the second engagement section 282b of the stationary contact 282. When the movable contact 288 is touching the common stationary contact 280 and the first engagement section 282a of the stationary contact 282, the first conductor 254a is electrically connected to the second electrical conductor 254b to transmit a first (e.g. up) shift control signal to the controller 24. On the other hand, when the movable contact 288 is touching the common stationary contact 280 and the second engagement section 282b of the stationary contact 282, the first conductor 254a is electrically connected to the third electrical conductor 254c to transmit a second (e.g. down) shift control signal to the controller 24.

The second engagement section 282b is located circumferentially further in the actuating direction than the first engagement sections 282a from the original position. In other words, the locations of the first and second engagement sections 282a and 282b correspond to different strokes of the actuating member 261 Thus, due to this arrangement, the controller 24 is arranged and configured to initiate one of the up shift and the down shift of the bicycle shift mechanism 16 when the operating member 261 is moved along a first predetermined stroke in the actuating direction, and the controller 24 is arranged and configured to initiate the other one of the up shift and the down shift of the bicycle shift mechanism 16 when the operating member 261 is moved along a second predetermined stroke in the actuating direction that is larger than the first predetermined stroke.

If only the first electrical shift control signal is received by the controller 24 within the predetermined period of time (e.g. one second), the controller 24 will initiate an up shift of the bicycle shift mechanism 16. However, if the second electrical shift control signal is received by the controller 24 within the predetermined period of time (e.g. one second), the controller 24 will initiate a down shift of the bicycle shift mechanism 16. Due to the construction illustrated herein, the first electrical shift control signal will be received prior to receiving the second electrical shift control signal when the actuating member 261 is moved from the original position through the first actuating position to the second actuating position. Thus, the predetermined period of time should start being measured from the time when the first signal is initially received.

Basically, the common stationary contact 280 is a ring shaped contact element with a stationary engagement surface that is always touching the movable contact 288. The common stationary contact 280 is constructed of a rigid electrical conductive material such as those known in the art. The common stationary contact 280 is fixedly secured to the cover 266 of the housing 260. The first electrical conductor 254a of the electrical cord 254 is electrically connected to the common stationary contact 280 by soldering or otherwise attaching the conductor thereto.

Basically, the stationary contact 282 is an arc shaped contact element with the first and second engagement sections 282a and 282b constructed of a rigid electrical conductive material such as those known in the art. The stationary contact 282 is fixedly secured to the cover 266 of the housing 260. The second and third electrical conductors 254b and 254c of the electrical cord 254 are electrically connected to the first and second engagement sections 282a and 282b of the first stationary contact 282 by soldering or otherwise attaching the conductors thereto.

The movable contact 288 moves with the pivot shaft 272 to slide into electrical engagement with the first and second engagement sections 282a and 282b of the stationary contact 282. Thus, the movable contact 288 is configured and arranged to selectively connect the common stationary contact 280 to the first and second engagement sections 282a and 282b of the stationary contact 282 using a sliding electrical contact arrangement. This sliding movement of the movable contact 288 causes any oxidation or other contaminants to be wiped off of the contact or engagement surfaces of the contacts 280, 282, and 288.

The second electrical shift control switch 238 is fixedly coupled to the inner side wall of the brake lever bracket 30. The second electrical shift control switch 238 is either identical to the first electrical shift control switch 236 or the housing of the second electrical shift control switch 238 is modified to provide a more integrated housing control switch. Preferably, the gripping body 40 of the brake lever bracket 30 forms a part of the housing of the second electrical shift control switch 238. Thus, other than the possible modification to the housing of the second electrical shift control switch 238, the first and second electrical shift control switches 236 and 238 operate in an identical manner. Of course, the second electrical shift control switch 238 has its rotationally operating axis or pivot axis A3 oriented to be substantially parallel the rotationally operating axis or brake pivot axis A1 of the brake lever 32. Of course, it will be apparent to those skilled in the art from this disclosure that the control device 212R is used in conjunction with the controller 24 of the first embodiment, but that the controller 24 is programmed in accordance with this second embodiment. Furthermore, it will be apparent to those skilled in the art from this disclosure that a left hand side control device (not shown) that is a mirror image of the right hand side control device 212R described herein will also be used with the controller 24 in order to control the bicycle shift mechanism 20.

### THIRD EMBODIMENT

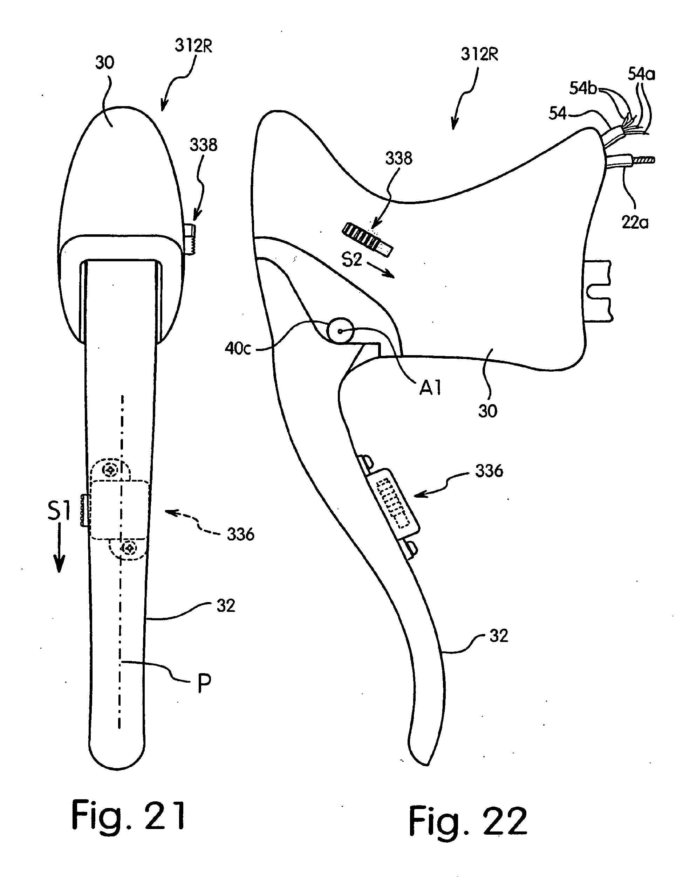

Referring now to Figures 21-26, a right hand side electrical shift and brake control devices 312R will now be explained that is mounted to the bicycle handlebar 14 in accordance with a third embodiment. A left hand side control device (not shown) is also provided that is essentially identical in construction and operation to the right hand side electrical shift and brake control device 312R, except that they are mirror images. Thus, only the control device 312R will be discussed and illustrated herein.

Basically, the control device 312R is identical to the electrical shift and brake control device 12R of the first embodiment, except that the electrical shift control switches 36 and 38 of the first embodiment have been replaced with a pair of electrical shift control switches 336 and 338 in accordance with this third embodiment. In particular, the electrical shift control switches 336 and 338 are identical to the electrical shift control switches 36 and 38, except the electrical shift control switches 336 and 338 uses a linear sliding switch instead of a rotary switch. Accordingly, some of the parts of the third embodiment that are identical or substantially identical will be given the same reference numerals as those used to explain the first embodiment for the sake of brevity.

The electrical shift control switches 336 and 338 in accordance with the third embodiment will now be explained as being installed on the brake lever 32 and the brake lever bracket 30, respectively. In view of the similarity between the first and third embodiments, the descriptions of the parts of the third embodiment that are identical to the parts of the first embodiment may be omitted for the sake of brevity. However, it will be apparent to those skilled in the art from this disclosure that the descriptions and illustrations of the first embodiment also apply to this third embodiment, except as explained and illustrated herein.

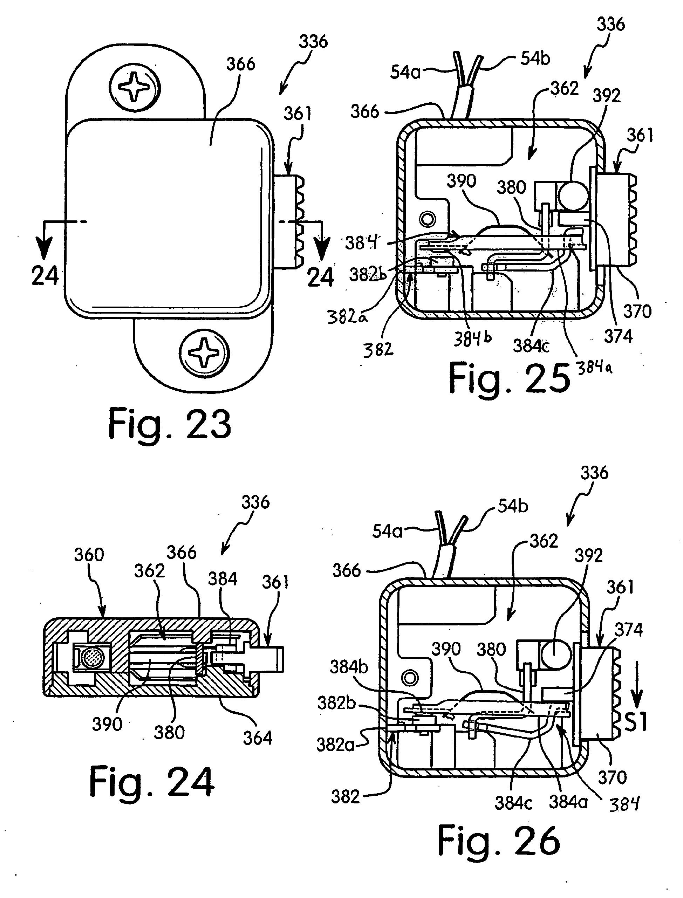

Basically, the first electrical shift control switch 336 includes a housing 360, an operating member 361 and an electrical contact assembly 362 that is identical to the electrical contact assembly 62 discussed above. The operating member 361 is slideably coupled to the housing 360 and operatively coupled to the electrical contact assembly 362. The electrical contact assembly 362 is mounted within the housing 360 and is configured and arranged to be operated by the sliding operating member 361. As explained below in more detail, the electrical shift control switch 336 has an original position (Figure 25) and an actuating position (Figure 26). However, the electrical shift control switch 336 can be utilized for both upshifting and downshifting of the bicycle shift mechanism 16 in a manner identical to the first embodiment. In other words, the only significant difference between this embodiment and the first embodiment is the structure and manner of movement of the operating member 361, which slides in a linear manner.

Preferably, the housing 360 is constructed of two pieces. For example, the housing 360 as illustrated, includes a base 364 and a cover 366 that is fixedly coupled to the base 364. The base 364 and cover 366 are preferably constructed of a hard rigid material such as a hard rigid plastic material. The electrical contact assembly 362 is housed within the housing 360 between the base 364 and the cover 366 and electrically coupled to the electrical conductors 54a and 54b of the electrical cord 54 (identical to the first embodiment).

The operating member 361 protrudes out between the base 364 and the cover 366 of the housing 360 such that sliding movement of the operating member 361 causes the electrical contact assembly 362 to move from an original position to an actuating position. In this embodiment, the operating member 361 extends outwardly past the outside edge of the brake lever 32 as seen in Figure 21. Thus, the rider can easily operate the electrical shift control switch 336 by sliding the operating member 361 down from the original position. When the operating member 361 is moved to the actuating position, a shift control signal is sent to the controller 24. The controller 24 will initiate an up shift or down shift of the bicycle shift mechanism 16 depending on the period of time in which the shift control signal is received in a manner identical to the first embodiment.

The operating member 361 basically has a knob or button 370 with a toggle member 374 integrally formed with the knob 370. The inner end of the toggle member 374 is configured and arranged to operate the electrical contact assembly 362 in the same manner as the first embodiment. Thus, sliding movement of the knob 370 by the rider causes the toggle member 374 to slide along a shift path S1. Preferably, the shift path S1 of the operating member 361 is parallel to the brake lever operating plane P of the brake lever 32. Thus, the shift path S1 of the operating member 361 is substantially perpendicular or orthogonally arranged relative to the brake pivot axis A1.

The electrical contact assembly 362 preferably includes a common contact bar 380, a stationary contact 382, a movable contact 384, and a biasing element 390 formed of a leaf spring. The movable contact 384 includes a first mounting element 384a with a contact element 384b mounted on one end of the first mounting element 384a, and a second mounting element 384c coupled to the other end of the first mounting element 384a. The stationary contact 382 includes a wiring plate 382a and a contact element 382b with a stationary engagement surface. These parts of the electrical contact assembly 362 are identical to the corresponding parts of the first embodiment. Thus, these parts will not be explained in further detail herein. In other words, basically, the contacts 382 and 384 are constructed and operate in the same manner as the contacts 82 and 84 of the first embodiment. Likewise, the biasing element 390 is constructed and operates in the same manner as the biasing element 90 of the first embodiment. Thus, the description of the biasing element 390 of the first embodiment applies to the biasing element 90. Finally, this embodiment includes a stop member 392 and the housing 360 acting as an additional stop member in a manner identical to the first embodiment.

The second electrical shift control switch 338 is fixedly coupled to the inner side wall of the brake lever bracket 30 to side along a shift path S2. Thus, the shift path S2 of the operating member 361 is substantially perpendicular or orthogonally arranged relative to the brake pivot axis A1. The second electrical shift control switch 338 is either identical to the first electrical shift control switch 336 or the housing of the second electrical shift control switch 338 is modified to provide a more integrated housing control switch. Preferably, the gripping body 40 of the brake lever bracket 30 forms a part of the housing of the second electrical shift control switch 338. Thus, other than the possible modification to the housing of the second electrical shift control switch 338, the first and second electrical shift control switches 336 and 338 operate in an identical manner. Of course, the second electrical shift control switch 338 slides in a different direction from the first electrical shift control switch 336. Of course, it will be apparent to those skilled in the art from this disclosure that the control device 312R is used in conjunction with the controller 24 of the first embodiment. Furthermore, it will be apparent to those skilled in the art from this disclosure that a left hand side control device (not shown) that is a mirror image of the right hand side control device 212R described herein will also be used with the controller 24 in order to control the bicycle shift mechanism 20.

### FOURTH EMBODIMENT

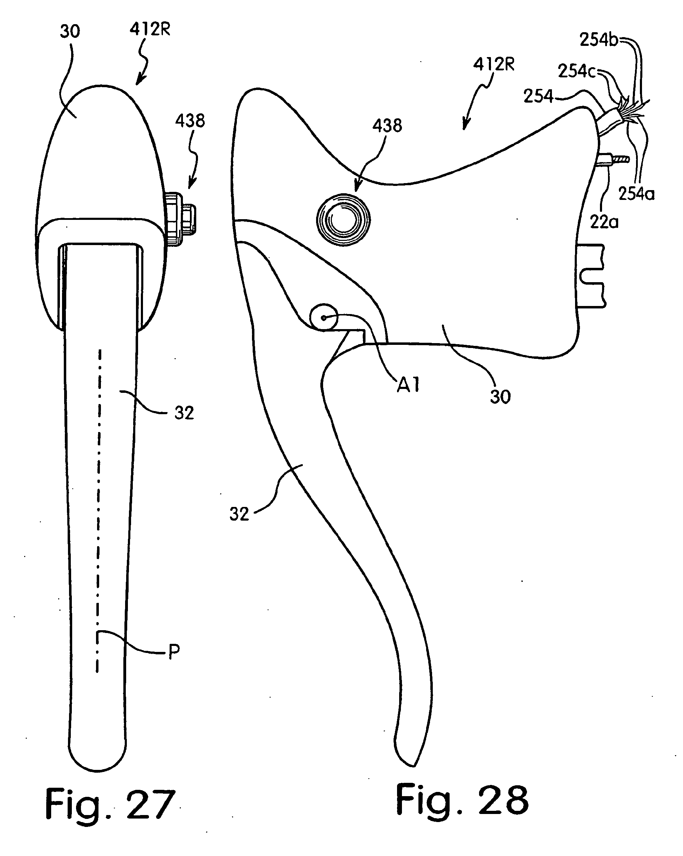

Referring now to Figures 27-31, a right hand side electrical shift and brake control devices 412R will now be explained that is mounted to the bicycle handlebar 14 in accordance with a fourth embodiment. A left hand side control device (not shown) is also provided that is essentially identical in construction and operation to the right hand side electrical shift and brake control device 412R, except that they are mirror images. Thus, only the control device 412R will be discussed and illustrated herein.

Basically, the control device 412R is identical to the electrical shift and brake control device 212R of the second embodiment, except that the electrical shift control switches 236 and 238 of the second embodiment have been replaced with push button type electrical shift control switch 438 in accordance with this fourth embodiment. In particular, the electrical shift control switch 438 is identical to the electrical shift control switches 236 or 238, except the electrical shift control switch 438 uses a linear push button switch instead of a rotary switch. Accordingly, some of the parts of the fourth embodiment that are identical or substantially identical to parts of the second embodiment will be given the same reference numerals as those used to explain the second embodiment for the sake of brevity. Moreover, parts of this fourth embodiment that are functionally identical to parts of the second embodiment will be given the same reference numerals but "200" added thereto (i.e. 400 series references numerals).

The electrical shift control switch 438 in accordance with the fourth embodiment will now be explained as being installed on the brake lever bracket 30. In view of the similarity between the fourth and second embodiments, the descriptions of the parts of the fourth embodiment that are identical or functionally identical to the parts of the second embodiment may be omitted for the sake of brevity. However, it will be apparent to those skilled in the art from this disclosure that the descriptions and illustrations of the second embodiment also apply to this fourth embodiment, except as explained and illustrated herein.

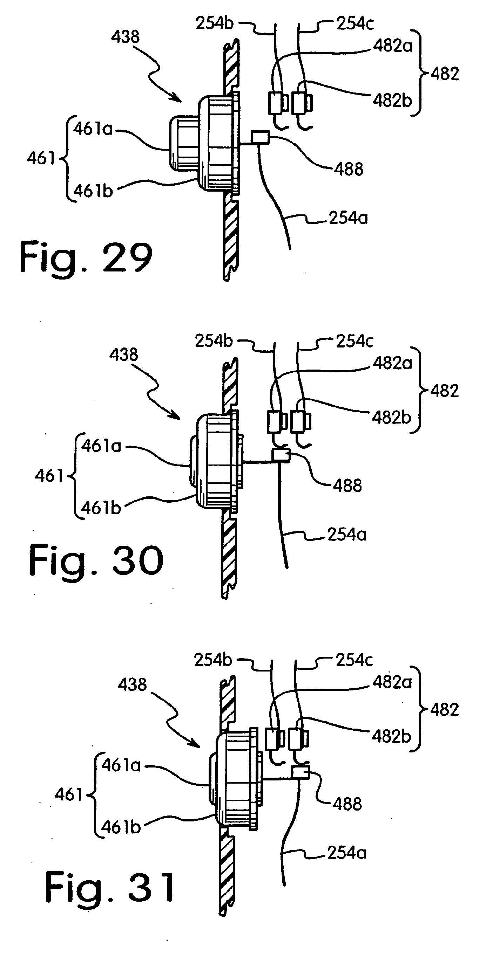

Basically, the electrical shift control switch 438 includes a housing or mounting portion, which is an integral part of the brake lever bracket 30, an operating member 461 and an electrical contact assembly (only diagrammatically illustrated) as well as other parts that are not shown for the sake of simplicity. The operating member 461 is a two part push button type switch that includes a first actuating portion 461a and a second actuating portion 461 b. The operating member 461 moves along a path parallel to the brake pivot axis A1. The electrical contact assembly is mounted within the brake lever bracket, and is configured and arranged to be operated by the operating member 461. The electrical shift control switch 438 has an original position (Figure 29), a first actuating position (Figure 30) and a second actuating position (Figure 31). The original position can be considered non-actuating, neutral or rest position since no electrical connection is made in this position and the switch is normally stationary (at rest) in this position. Similar to the second embodiment, the switch 438 preferably moves in a single actuating direction from the original position (Figure 29) to the first actuating position (Figure 30) and also in the single actuating direction from the original position to the second actuating position (Figure 31). However, in this embodiment, different electrical shift signals are sent from the switch 438 when located in the first and second actuating positions. In any case, the electrical shift control switch 438 can be utilized for both upshifting and downshifting the bicycle shift mechanism 16 by moving the switch 438 in the single actuating direction. In particular, in this embodiment, the controller 24 is programmed in a manner identical to the second embodiment to initiate an up shift of the bicycle shift mechanism 16 when only a first electrical shift control signal is received within a predetermined period of time (e.g. one second), and the controller 24 is programmed to initiate a down shift of the bicycle shift mechanism 16 when a second electrical shift control signal is received within the predetermined period of time (e.g. one second).

The electrical contact assembly is electrically coupled to one set of the electrical conductors 254a, 254b and 254c of the modified electrical cord 254 in a manner similar to the second embodiment. The electrical contact assembly preferably includes a stationary contact 482, a movable contact 488 and a biasing element (not shown). The biasing element biases the operating member 461 in a direction opposite to the actuating direction. When the rider pushes the operating member 461 in the actuating direction, this moves the movable contact 488 into electrical engagement with the stationary contact 482.

More specifically, the stationary contact 482 includes a first engagement section 482a, a second engagement section 482b and an optional non-conductive section (not shown) arranged between the first and second engagement sections 482a and 482b. When operating member 461 is pushed in the actuating direction from the original position, the movable contact 488 first moves into contact with the first engagement section 482a (i.e. at the first actuating position) as shown in Figure 30. If the operating member 461 is further pushed in the actuating direction from the first actuating position, the movable contact 488 will move into contact with the second engagement section 482b (i.e. the second actuating position) shown in Figure 31.

It will be apparent to those skilled in the art from this disclosure that the electrical contact assembly in this fourth embodiment can be constructed in accordance with the second embodiment with a linking structure (not shown) arranged between the operating member 461 and the rotatable contact 288 in order to convert the linear movement of the operating member 461 to rotational movement of the movable contact 288. Alternatively, it will be apparent to those skilled in the art from this disclosure that the electrical contact assembly in this fourth embodiment can be constructed as a modified, linear version of the structure of the second embodiment.

Of course, it will be apparent to those skilled in the art from this disclosure that the control device 412R is used in conjunction with the controller 24 of the first embodiment, but that the controller 24 is programmed in accordance with the second embodiment. Furthermore, it will be apparent to those skilled in the art from this disclosure that a left hand side control device (not shown) that is a mirror image of the right hand side control device 412R described herein will also be used with the controller 24 in order to control the bicycle shift mechanism 20.

While this embodiment is illustrated with two different actuating positions and two different engagement sections 482a and 482b in order to send two different shift control signals to the controller 24 corresponding to different strokes of the operating member 461, it will be apparent to those skilled in the art from this disclosure that this embodiment could be modified to utilize a single actuating position and a single shift control signal (in a manner similar to the first and third embodiments) and utilize the control logic of the first embodiment to control shifting based on time held in the single actuating position.

### FIFTH EMBODIMENT

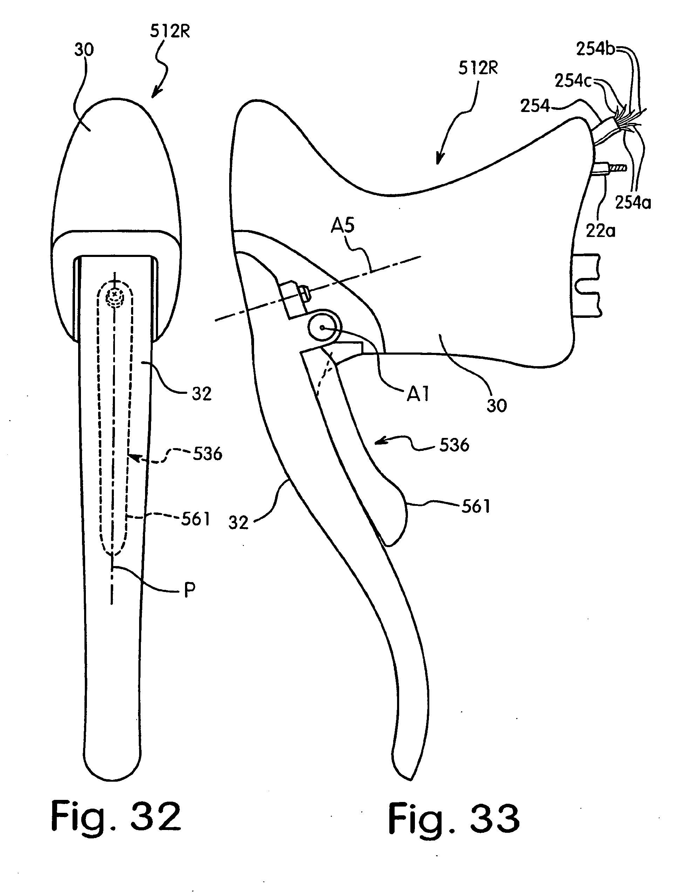

Referring now to Figures 32-36, a right hand side electrical shift and brake control devices 512R will now be explained that is mounted to the bicycle handlebar 14 in accordance with a fifth embodiment. A left hand side control device (not shown) is also provided that is essentially identical in construction and operation to the right hand side electrical shift and brake control device 512R, except that they are mirror images. Thus, only the control device 512R will be discussed and illustrated herein.

Basically, the control device 512R is identical to the electrical shift and brake control device 212R of the second embodiment, except that the electrical shift control switches 236 and 238 of the second embodiment have been replaced with lever type electrical shift control switch 536 in accordance with this fifth embodiment. In particular, the electrical shift control switch 536 is identical to the electrical shift control switches 236 or 238, except the electrical shift control switch 536 uses an elongated lever switch instead of the rotary knob switch. Accordingly, some of the parts of the fifth embodiment that are identical or substantially identical to parts of the second embodiment will be given the same reference numerals as those used to explain the second embodiment for the sake of brevity. Moreover, parts of this fifth embodiment that are functionally identical to parts of the second embodiment will be given the same reference numerals but "300" added thereto (i.e. 500 series references numerals).

The electrical shift control switch 536 in accordance with the fifth embodiment will now be explained as being installed on the brake lever 32. In view of the similarity between the fifth and second embodiments, the descriptions of the parts of the fifth embodiment that are identical or functionally identical to the parts of the second embodiment may be omitted for the sake of brevity. However, it will be apparent to those skilled in the art from this disclosure that the descriptions and illustrations of the second embodiment also apply to this fifth embodiment, except as explained and illustrated herein.

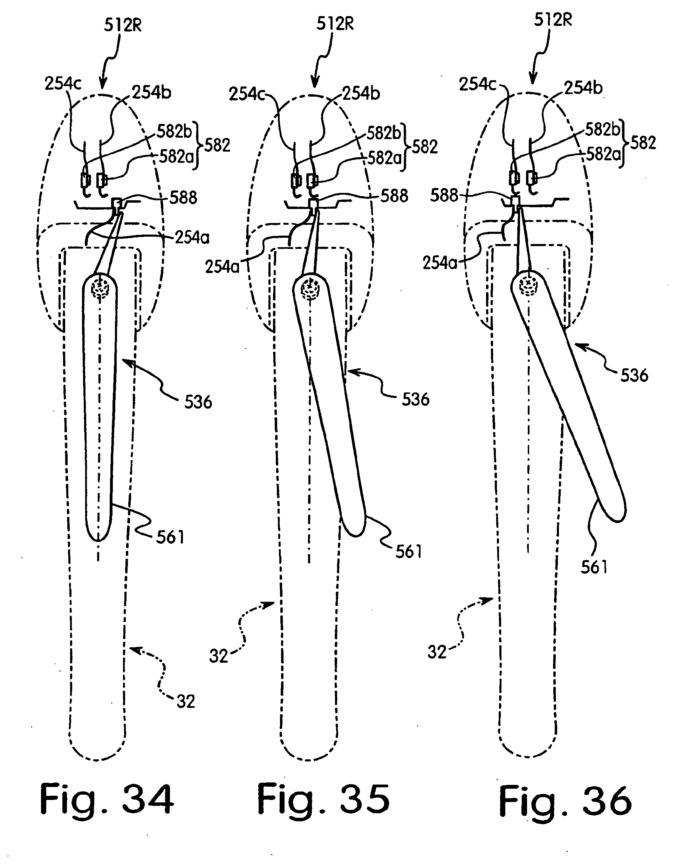

Basically, the electrical shift control switch 536 includes a housing or mounting portion (not shown), an operating member 561 and an electrical contact assembly (only diagrammatically illustrated) as well as other parts that are not shown for the sake of simplicity. The operating member 561 is an elongated lever member that is pivotally coupled to the housing (not shown) for rotation about a rotational operating axis A5 located at the upper end of the brake lever 32. Thus, the bottom portion of the operating member 561 moves along an arc. The electrical contact assembly is mounted within the housing (not shown), and is configured and arranged to be operated by the operating member 561. The electrical shift control switch 536 has an original position (Figure 34), a first actuating position (Figure 35) and a second actuating position (Figure 36). The original position can be considered non-actuating, neutral or rest position since no electrical connection is made in this position and the switch is normally stationary (at rest) in this position. Similar to the second embodiment, the switch 536 preferably moves in a single actuating direction from the original position (Figure 34) to the first actuating position (Figure 35) and also in the single actuating direction from the original position to the second actuating position (Figure 36). However, in this embodiment, different electrical shift signals are sent from the switch 536 when located in the first and second actuating positions. In any case, the electrical shift control switch 536 can be utilized for both up shifting and down shifting the bicycle shift mechanism 16 by moving the switch 536 in the single actuating direction. In particular, in this embodiment, the controller 24 is programmed in a manner identical to the second embodiment to initiate an up shift of the bicycle shift mechanism 16 when only a first electrical shift control signal is received within a predetermined period of time (e.g. one second), and the controller 24 is programmed to initiate a down shift of the bicycle shift mechanism 16 when a second electrical shift control signal is received within the predetermined period of time (e.g. one second).

The electrical contact assembly is electrically coupled to one set of the electrical conductors 254a, 254b and 254c of the modified electrical cord 254 in a manner similar to the second embodiment. The electrical contact assembly preferably includes a stationary contact 582, a movable contact 588 and a biasing element (not shown). The biasing element biases the operating member 561 in a direction opposite to the actuating direction. When the rider pushes the operating member 561 in the actuating direction, this moves the movable contact 588 into electrical engagement with the stationary contact 582.

More specifically, the stationary contact 582 includes a first engagement section 582a, a second engagement section 582b and an optional non-conductive section (not shown) arranged between the first and second engagement sections 582a and 582b. When operating member 561 is pivoted in the actuating direction from the original position, the movable contact 588 first moves into contact with the first engagement section 582a (i.e. at the first actuating position) as shown in Figure 35. If the operating member 561 is further pivoted in the actuating direction from the first actuating position, the movable contact 588 will move into contact with the second engagement section 582b (i.e. the second actuating position) shown in Figure 36.

It will be apparent to those skilled in the art from this disclosure that the electrical contact assembly in this fifth embodiment can be constructed in accordance with the second embodiment since both the operating member 261 and the operating member 561 both are pivotal operating members. Alternatively, it will be apparent to those skilled in the art from this disclosure that the electrical contact assembly in this fifth embodiment can be constructed as a modified version of the structure of the second embodiment, if needed and/or desired.

Of course, it will be apparent to those skilled in the art from this disclosure that the control device 512R is used in conjunction with the controller 24 of the first embodiment, but that the controller 24 is programmed in accordance with the second embodiment. Furthermore, it will be apparent to those skilled in the art from this disclosure that a left hand side control device (not shown) that is a mirror image of the right hand side control device 512R described herein will also be used with the controller 24 in order to control the bicycle shift mechanism 20.

While this embodiment is illustrated with two different actuating positions and two different engagement sections 582a and 582b in order to send two different shift control signals to the controller 24 corresponding to different strokes of the operating member 561, it will be apparent to those skilled in the art from this disclosure that this embodiment could be modified to utilize a single actuating position and a single shift control signal (in a manner similar to the first and third embodiments) and utilize the control logic of the first embodiment to control shifting based on time held in the single actuating position.

### SIXTH EMBODIMENT

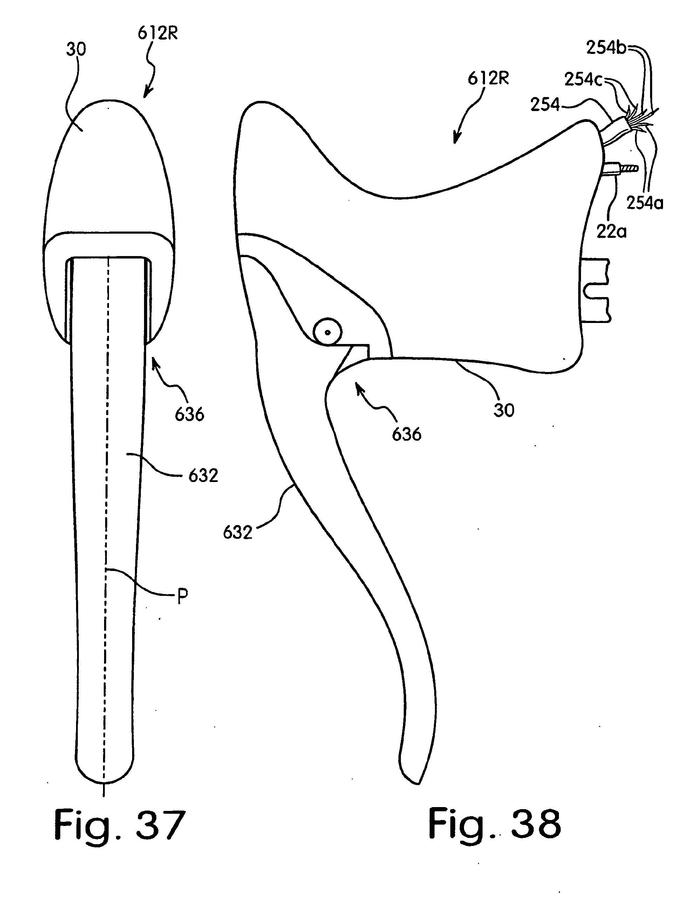

Referring now to Figures 37-41, a right hand side electrical shift and brake control devices 612R will now be explained that is mounted to the bicycle handlebar 14 in accordance with a sixth embodiment. A left hand side control device (not shown) is also provided that is essentially identical in construction and operation to the right hand side electrical shift and brake control device 612R, except that they are mirror images. Thus, only the control device 612R will be discussed and illustrated herein.

Basically, the control device 612R is identical to the electrical shift and brake control device 212R of the second embodiment, except that the electrical shift control switches 236 and 238 of the second embodiment have been replaced with dual control lever type electrical shift control switch 636 in accordance with this sixth embodiment. In particular, the electrical shift control switch 636 is identical to the electrical shift control switches 236 or 238, except the electrical shift control switch 636 uses an integrated dual control switch instead of the rotary knob switch. Accordingly, some of the parts of the sixth embodiment that are identical or substantially identical to parts of the second embodiment will be given the same reference numerals as those used to explain the second embodiment for the sake of brevity. Moreover, parts of this sixth embodiment that are functionally identical to parts of the second embodiment will be given the same reference numerals but "400" added thereto (i.e. 600 series references numerals).

The electrical shift control switch 636 in accordance with the sixth embodiment will now be explained as being integrated with a modified (dual control) brake lever 632. In view of the similarity between the sixth and second embodiments, the descriptions of the parts of the sixth embodiment that are identical or functionally identical to the parts of the second embodiment may be omitted for the sake of brevity. However, it will be apparent to those skilled in the art from this disclosure that the descriptions and illustrations of the second embodiment also apply to this sixth embodiment, except as explained and illustrated herein.

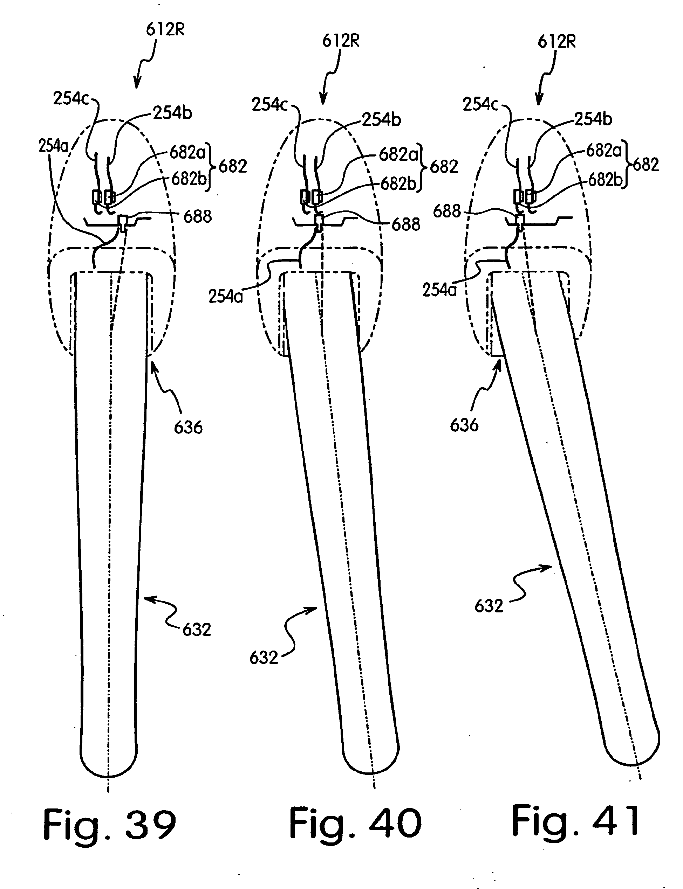

Basically, the electrical shift control switch 636 includes a housing or mounting portion integrated with the brake lever bracket 30 (not shown), an operating member or dual control lever 632 and an electrical contact assembly (only diagrammatically illustrated) as well as other parts that are not shown for the sake of simplicity. The modified brake lever 632 which integrates the function of an operating member such as member 561 of the fifth embodiment with the brake lever 32. In other words, this embodiment is very similar to the fifth embodiment, except the levers 32 and 561 are combined in this embodiment. The control lever 632 is arranged for rotation about the brake pivot axis during braking, and a rotational operating axis located at the upper end of the control lever 632 during shifting functions, which is parallel to the brake operating plane in a manner similar to the fifth embodiment. Thus, the bottom portion of the control lever 632 moves along an arc during shifting control functions as shown in Figures 39-41. The electrical contact assembly is mounted within the housing (not shown), and is configured and arranged to be operated by the control lever 632. The electrical shift control switch 636 has an original position (Figure 39), a first actuating position (Figure 40) and a second actuating position (Figure 41). The original position can be considered non-actuating, neutral or rest position since no electrical connection is made in this position and the switch is normally stationary (at rest) in this position. Similar to the second embodiment, the switch 636 preferably moves in a single actuating direction from the original position (Figure 39) to the first actuating position (Figure 40) and also in the single actuating direction from the original position to the second actuating position (Figure 41). However, in this embodiment, different electrical shift signals are sent from the switch 636 when located in the first and second actuating positions. In any case, the electrical shift control switch 636 can be utilized for both up shifting and down shifting the bicycle shift mechanism 16 by moving the switch 636 in the single actuating direction. In particular, in this embodiment, the controller 24 is programmed in a manner identical to the second embodiment to initiate an up shift of the bicycle shift mechanism 16 when only a first electrical shift control signal is received within a predetermined period of time (e.g. one second), and the controller 24 is programmed to initiate a down shift of the bicycle shift mechanism 16 when a second electrical shift control signal is received within the predetermined period of time (e.g. one second).

The electrical contact assembly is electrically coupled to one set of the electrical conductors 254a, 254b and 254c of the modified electrical cord 254 in a manner similar to the second embodiment. The electrical contact assembly preferably includes a stationary contact 682, a movable contact 688 and a biasing element (not shown). The biasing element biases the dual control lever 632 in a direction opposite to the actuating direction. When the rider pushes the dual control lever 632 in the actuating direction, this moves the movable contact 688 into electrical engagement with the stationary contact 682.

More specifically, the stationary contact 682 includes a first engagement section 682a, a second engagement section 682b and an optional non-conductive section (not shown) arranged between the first and second engagement sections 682a and 682b. When the dual control lever 632 is pivoted in the actuating direction from the original position, the movable contact 688 first moves into contact with the first engagement section 682a (i.e. at the first actuating position) as shown in Figure 40. If the dual control lever 632 is further pivoted in the actuating direction from the first actuating position, the movable contact 688 will move into contact with the second engagement section 682b (i.e. the second actuating position) shown in Figure 41.

It will be apparent to those skilled in the art from this disclosure that the electrical contact assembly in this sixth embodiment can be constructed in accordance with the second embodiment since both the operating member 261 and the dual control lever 632 are both are pivotal operating members. Alternatively, it will be apparent to those skilled in the art from this disclosure that the electrical contact assembly in this sixth embodiment can be constructed as a modified version of the structure of the second embodiment, if needed and/or desired.

Of course, it will be apparent to those skilled in the art from this disclosure that the control device 612R is used in conjunction with the controller 24 of the first embodiment, but that the controller 24 is programmed in accordance with the second embodiment. Furthermore, it will be apparent to those skilled in the art from this disclosure that a left hand side control device (not shown) that is a mirror image of the right hand side control device 612R described herein will also be used with the controller 24 in order to control the bicycle shift mechanism 20.

While this embodiment is illustrated with two different actuating positions and two different engagement sections 682a and 682b in order to send two different shift control signals to the controller 24 corresponding to different strokes of the dual control lever 632, it will be apparent to those skilled in the art from this disclosure that this embodiment could be modified to utilize a single actuating position and a single shift control signal (in a manner similar to the first and third embodiments) and utilize the control logic of the first embodiment to control shifting based on time held in the single actuating position.

### GENERAL INTERPRETATION OF TERMS FOR THE EMBODIMENTS

As used herein, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention.

The terms of degree such as "substantially", "about" and "approximately" as used herein mean a reasonable amount of deviation of the modified term such that the end result is not significantly changed. The term "actuating position" as used herein means a state in which an electrical connection is formed by an orientation of an operation member. The term "neutral position" as used herein means a state in which an electrical connection is not formed by an orientation of an operation member.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims.

## Claims

1. A bicycle operating component comprising:
an electrical shift control switch (36, 236), comprising a mounting portion (60, 260) configured to be coupled to a part (14) of the bicycle; and an operating member (61, 261) movably coupled to the mounting portion (60, 260),the operating member (61, 261) being arranged and configured to move relative to the mounting portion (60, 260) in a single actuating direction from an original position,
a controller (24) operatively coupled to the electrical shift control switch (36, 236), the electrical shift control switch (36, 236) being arranged and configured to send electrical signals to the controller,
**characterized in that**
the controller considers a predetermined time period in order to selectively operate a bicycle shift mechanism both in a first direction and in a second direction opposite to the first direction on the basis of the electrical signals sent by the electrical shift control switch when the operating member is moved from the original position in the single actuating direction.

2. The bicycle operating component according to claim 1, wherein
the operating member (61, 261) of the electrical shift control switch (36, 236) is further arranged and configured to rotate relative to the mounting portion (60, 260) about a rotational operating axis (A2) or to move in a linear sliding manner relative to the mounting portion.

3. The bicycle operating component according to claim 1 or 2, further including
a stationary contact (82, 282) having a stationary engagement surface, and
a movable contact (84, 284) having a movable engagement surface(84b), the movable contact being arranged and configured to be moved by the operating member (61, 261) such that the movable engagement surface moves into electrical engagement with the stationary engagement surface (82b) upon movement of the operating member a predetermined distance in the actuating direction.

4. The bicycle operating component according to any one of claims 1 to 3 further including a biasing element (91) arranged and configured to urge the operating member to the original position.

5. The bicycle operating component according to any one of claims 1 to 4, wherein
the mounting portion includes one or more stop members (92, 267) arranged and configured to limit movement of the operating member (61, 261) in a direction opposite to the actuating direction at the original position and/or in the actuating direction.

6. The bicycle operating component according to claim 3, wherein
the controller (24) is arranged and configured to initiate one of the up shift and the down shift of the bicycle shift mechanism when the movable engagement surface (84b, 284b) is in electrical engagement with the stationary engagement surface(82b, 282b) for a period of time less than a predetermined time, and
the controller (24) is arranged and configured to initiate the other one of the up shift and the down shift of the bicycle shift mechanism when the movable engagement surface (84b, 284b) is in electrical engagement with the stationary engagement surface (82b, 282b) for a period of time at least as long as the predetermined time.

7. The bicycle operating component according to claim 6, wherein
the operating member (61, 261) is arranged and configured to move along substantially the same stroke to initiate both up and down shifts.

8. The bicycle operating component according to anyone of claims 1 to 5, wherein
the controller (24) is arranged and configured to initiate one of the up shift and the down shift of the bicycle shift mechanism when the operating member (61, 261) is moved along a first predetermined stroke in the actuating direction, and
the controller (24) is arranged and configured to initiate the other one of the up shift and the down shift of the bicycle shift mechanism when the operating member is moved along a second predetermined stroke in the actuating direction that is larger than the first predetermined stroke.

9. The bicycle operating component according to any one of claims 1 to 7, wherein
the electrical shift control switch (36, 236) is arranged and configured to send an electrical signal to the controller (24) when the operating member (61, 261) is moved a predetermined distance in the actuating direction,
the controller (24) is arranged and configured to initiate one of the up shift and the down shift of the bicycle shift mechanism when the electrical signal is received for a period of time less than a predetermined time, and
the controller (24) is arranged and configured to initiate the other one of the up shift and the down shift of the bicycle shift mechanism when the electrical signal is received for a period of time at least as long as the predetermined time.

10. The bicycle operating component according to claim 8, wherein
the electrical shift control switch (36, 236) is arranged and configured to send a first electrical signal to the controller (24) when the operating member (61, 261) is moved along the first predetermined stroke in the actuating direction, and
the electrical shift control switch (36, 236) is arranged and configured to send a second electrical signal to the controller (24) when the operating member (61, 261) is moved along the second predetermined stroke in the actuating direction.

11. The bicycle operating component according to claim 10, wherein
the controller (24) is arranged and configured to initiate one of the up shift and the down shift of the bicycle shift mechanism when only the first electrical signal is received within a predetermined time period, and
the controller (24) is arranged and configured to initiate the other one of the up shift and the down shift of the bicycle shift mechanism when the second electric signal is received within the predetermined time period.

12. The bicycle operating component according to any one of claims 1 to 11, further comprising:
a brake lever bracket (30) configured to be non-movably attached to a bicycle handlebar; and
a brake lever (32) pivotally coupled to the brake lever bracket (30);
the mounting portion (60, 260) of the electrical shift control switch (36, 236) being non-movable attached to the brake lever (32) and/or to the brake lever bracket (30).

## Patentansprüche

1. Fahrradbetätigungskomponente, umfassend:
einen elektrischen Schaltsteuerswitch (36, 236), umfassend einen Montageabschnitt (60, 260), konfiguriert, um an ein Teil (14) des Fahrrads gekoppelt zu werden; und ein Betätigungsteil (61, 261), beweglich gekoppelt an den Montageabschnitt (60, 260),
wobei das Betätigungsteil (61, 261) angeordnet und konfiguriert ist, um sich relativ zu dem Montageabschnitt (60, 260) in einer einzigen Aktuationsrichtung von einer Ausgangsposition zu bewegen,
ein Steuermittel (24), wirkgekoppelt an den elektrischen Schaltsteuerswitch (36, 236),
wobei der elektrische Schaltsteuerswitch (36, 236) angeordnet und konfiguriert ist, um elektrische Signale zu dem Steuermittel zu senden,
**dadurch gekennzeichnet, dass**
das Steuermittel eine vorbestimmte Zeitspanne berücksichtigt zur wahlweisen Betätigung eines Fahrradschaltmechanismus sowohl in einer ersten Richtung als auch in einer zweiten Richtung, die der ersten Richtung entgegengesetzt ist, auf Basis der elektrischen Signale, gesendet durch den elektrischen Schaltsteuerswitch, wenn das Betätigungsteil von der Ausgangsposition in der einzigen Aktuationsrichtung bewegt wird.

2. Fahrradbetätigungskomponente gemäß Anspruch 1, wobei
das Betätigungsteil (61, 261) des elektrischen Schaltsteuerswitch (36, 236) ferner angeordnet und konfiguriert ist, um sich relativ zu dem Montageabschnitt (60, 260) um eine Drehbetätigungsachse (A2) zu drehen oder sich linear gleitartig relativ zu dem Montageabschnitt zu bewegen.

3. Fahrradbetätigungskomponente gemäß Anspruch 1 oder 2, ferner umfassend
einen stationären Kontakt (82, 282), aufweisend eine stationäre Eingriffsfläche, und
einen beweglichen Kontakt (84, 284), aufweisend eine bewegliche Eingriffsfläche (84b), wobei der bewegliche Kontakt angeordnet und konfiguriert ist, um durch das Betätigungsteil (61, 261) so bewegt zu werden, dass sich die bewegliche Eingriffsfläche in elektrischen Eingriff mit der stationären Eingriffsfläche (82b) bewegt auf Bewegung des Betätigungsteils eine vorbestimmte Distanz in der Aktuationsrichtung.

4. Fahrradbetätigungskomponente gemäß einem der Ansprüche 1 bis 3, ferner umfassend ein Beaufschlagungselement (91), angeordnet und konfiguriert, um das Betätigungsteil zu der Ausgangsposition zu beaufschlagen.

5. Fahrradbetätigungskomponente gemäß einem der Ansprüche 1 bis 4, wobei
der Montageabschnitt einen oder mehrere Stoppteile (92, 267) umfasst, angeordnet und konfiguriert zur Begrenzung einer Bewegung des Betätigungsteils (61, 261) in einer zur Aktuationsrichtung entgegengesetzten Richtung bei der Ausgangsposition und/oder in der Aktuationsrichtung.

6. Fahrradbetätigungskomponente gemäß Anspruch 3, wobei
das Steuermittel (24) angeordnet und konfiguriert ist, um eine von der Aufwärtsschaltung und der Abwärtsschaltung des Fahrradschaltmechanismus zu initiieren, wenn die bewegliche Eingriffsfläche (84b, 284b) in elektrischem Eingriff ist mit der stationären Eingriffsfläche (82b, 282b) für eine Zeitspanne, die kleiner ist als eine vorbestimmte Zeit, und
das Steuermittel (24) angeordnet und konfiguriert ist, um die andere von der Aufwärtsschaltung und der Abwärtsschaltung des Fahrradschaltmechanismus zu initiieren, wenn die bewegliche Eingriffsfläche (84b, 284b) in elektrischem Eingriff ist mit der stationären Eingriffsfläche (82b, 282b) für eine Zeitspanne, die zumindest so lang ist wie die vorbestimmte Zeit.

7. Fahrradbetätigungskomponente gemäß Anspruch 6, wobei
das Betätigungsteil (61, 261) angeordnet und konfiguriert ist, um sich entlang im Wesentlichen den gleichen Weg zu bewegen, um sowohl Aufwärts- als auch Abwärtsschaltungen zu initiieren.

8. Fahrradbetätigungskomponente gemäß einem der Ansprüche 1 bis 5, wobei
das Steuermittel (24) angeordnet und konfiguriert ist, um eine von der Aufwärtsschaltung und der Abwärtsschaltung des Fahrradschaltmechanismus zu initiieren, wenn das Betätigungsteil (61, 261) bewegt wird entlang einem ersten vorbestimmten Weg in der Aktuationsrichtung, und
das Steuermittel (24) angeordnet und konfiguriert ist, um die andere von der Aufwärtsschaltung und der Abwärtsschaltung des Fahrradschaltmechanismus zu initiieren, wenn das Betätigungsteil bewegt wird entlang eines zweiten vorbestimmten Wegs in der Aktuationsrichtung, der größer ist als der erste vorbestimmte Weg.

9. Fahrradbetätigungskomponente gemäß einem der Ansprüche 1 bis 7, wobei
der elektrische Schaltsteuerswitch (36, 236) angeordnet und konfiguriert ist, um ein elektrisches Signal zu dem Steuermittel (24) zu senden, wenn das Betätigungsteil (61, 261) eine vorbestimmte Distanz in der Aktuationsrichtung bewegt wird,
wobei das Steuermittel (24) angeordnet und konfiguriert ist, um eine von der Aufwärtsschaltung und der Abwärtsschaltung des Fahrradschaltmechanismus zu initiieren, wenn das elektrische Signal empfangen wird für eine Zeitspanne, die kleiner ist als eine vorbestimmte Zeit, und
das Steuermittel (24) angeordnet und konfiguriert ist, um die andere von der Aufwärtsschaltung und der Abwärtsschaltung des Fahrradschaltmechanismus zu initiieren, wenn das elektrische Signal empfangen wird für eine Zeitspanne, die zumindest so lang ist wie die vorbestimmte Zeit.

10. Fahrradbetätigungskomponente gemäß Anspruch 8, wobei
der elektrische Schaltsteuerswitch (36, 236) angeordnet und konfiguriert ist, um ein erstes elektrisches Signal zu dem Steuermittel (24) zu senden, wenn das Betätigungsmittel (61, 261) bewegt wird entlang dem ersten vorbestimmten Weg in der Aktuationsrichtung, und
der elektrische Schaltsteuerswitch (36, 236) angeordnet und konfiguriert ist, um ein zweites elektrisches Signal zu dem Steuermittel (24) zu senden, wenn das Betätigungsteil (61, 261) bewegt wird entlang dem zweiten vorbestimmten Weg in der Aktuationsrichtung.

11. Fahrradbetätigungskomponente gemäß Anspruch 10, wobei
das Steuermittel (24) angeordnet und konfiguriert ist, um eine von der Aufwärtsschaltung und der Abwärtsschaltung des Fahrradschaltmechanismus zu initiieren, wenn nur das erste elektrische Signal innerhalb einer vorbestimmten Zeitspanne empfangen wird, und
das Steuermittel (24) angeordnet und konfiguriert ist, um die andere von der Aufwärtsschaltung und der Abwärtsschaltung des Fahrradschaltmechanismus zu initiieren, wenn das zweite elektrische Signal innerhalb der vorbestimmten Zeitspanne empfangen wird.

12. Fahrradbetätigungskomponente gemäß einem der Ansprüche 1 bis 11, ferner umfassend:
eine Bremshebelhalterung (30), konfiguriert, um nicht beweglich an eine Fahrradlenkstange angebracht zu werden; und
einen Bremshebel (32), schwenkbar gekoppelt an die Bremshebelhalterung (30);
wobei der Montageabschnitt (60, 260) des elektrischen Schaltsteuerswitch (36, 236) nicht beweglich angebracht ist an dem Bremshebel (32) und/oder der Bremshebelhalterung (30).

## Revendications

1. Composant d'actionnement de bicyclette comprenant:
un commutateur de commande de changement de vitesse électrique (36, 236), comprenant une partie de montage (60, 260) configurée pour être couplée à une partie (14) de la bicyclette ; et un élément d'actionnement (61, 261) couplé mobile à la partie de montage (60, 260), l'élément d'actionnement (61, 261) étant agencé et configuré pour se déplacer par rapport à la partie de montage (60, 260) dans une direction d'actionnement unique depuis une position d'origine,
un contrôleur (24) couplé opérativement au commutateur de commande de changement de vitesse électrique (36, 236), le commutateur de commande de changement de vitesse électrique (36, 236) étant agencé et configuré pour envoyer des signaux électriques au contrôleur,
**caractérisé en ce que**
le contrôleur considère une période de temps prédéterminée afin d'actionner sélectivement un mécanisme de changement de vitesse de bicyclette, à la fois dans une première direction et dans une deuxième direction opposée à la première direction, sur la base des signaux électriques envoyés par le commutateur de commande de changement de vitesse électrique, lorsque l'élément d'actionnement est déplacé depuis la position d'origine dans la direction d'actionnement unique.

2. Composant d'actionnement de bicyclette selon la revendication 1, dans lequel
l'élément d'actionnement (61, 261) du commutateur de commande de changement de vitesse électrique (36, 236) est, en outre, agencé et configuré pour tourner par rapport à la partie de montage (60, 260) par rapport à un axe d'actionnement de rotation (A2) ou pour se déplacer de manière coulissante, linéaire, par rapport à la partie de montage.

3. Composant d'actionnement de bicyclette selon la revendication 1 ou 2, comprenant, en outre :
un contact stationnaire (82, 282) ayant une surface d'engagement stationnaire, et
un contact mobile (84, 284) ayant une surface d'engagement mobile (84b), le contact mobile étant agencé et configuré pour être déplacé par l'élément d'actionnement (61, 261), de sorte que la surface d'engagement mobile se déplace pour entrer en contact électrique avec la surface d'engagement stationnaire (82b) lors du mouvement de l'élément d'actionnement sur une distance prédéterminée dans la direction d'actionnement.

4. Composant d'actionnement de bicyclette selon l'une quelconque des revendications 1 à 3, comprenant, en outre, un élément de sollicitation (91) agencé et configuré pour solliciter l'élément d'actionnement vers la position d'origine.

5. Composant d'actionnement de bicyclette selon l'une quelconque des revendications 1 à 4, dans lequel la partie de montage comprend un ou plusieurs éléments d'arrêt (92, 267) agencés et configurés pour limiter le mouvement de l'élément d'actionnement (61, 261) dans une direction opposée à la direction d'actionnement au niveau de la position d'origine et/ou dans la direction d'actionnement.

6. Composant d'actionnement de bicyclette selon la revendication 3, dans lequel
le contrôleur (24) est agencé et configuré pour initier l'un d'un changement de vitesse vers une vitesse supérieure et d'un changement de vitesse vers une vitesse inférieure du mécanisme de changement de vitesse de bicyclette, lorsque la surface d'engagement mobile (84b, 284b) est en contact électrique avec la surface d'engagement stationnaire (82b, 282b) pendant une période de temps inférieure à un temps prédéterminé , et
le contrôleur (24) est agencé et configuré pour initier l'autre du changement de vitesse vers la vitesse supérieure et du changement de vitesse vers la vitesse inférieure du mécanisme de changement de vitesse de bicyclette, lorsque la surface d'engagement mobile (84b, 284b) est en contact électrique avec la surface d'engagement stationnaire (82b, 282b) pendant une période de temps au moins aussi longue que le temps prédéterminé.

7. Composant d'actionnement de bicyclette selon la revendication 6, dans lequel l'élément d'actionnement (61, 261) est agencé et configuré pour se déplacer sur sensiblement la même course, pour initier à la fois des changements de vitesse vers une vitesse supérieure et vers une vitesse inférieure.

8. Composant d'actionnement de bicyclette selon l'une quelconque des revendications 1 à 5, dans lequel
le contrôleur (24) est agencé et configuré pour initier l'un du changement de vitesse vers une vitesse supérieure et du changement de vitesse vers une vitesse inférieure du mécanisme du changement de vitesse de bicyclette, lorsque l'élément d'actionnement (61, 261) est déplacé le long d'une première course prédéterminée dans la direction d'actionnement, et
le contrôleur (24) est agencé et configuré pour initier l'autre du changement de vitesse vers une vitesse supérieure et du changement de vitesse vers une vitesse inférieure du mécanisme de changement de vitesse de bicyclette, lorsque l'élément d'actionnement est déplacé le long d'une deuxième course prédéterminée dans la direction d'actionnement qui est supérieure à la première course prédéterminée.

9. Composant d'actionnement de bicyclette selon l'une quelconque des revendications 1 à 7, dans lequel
le commutateur de commande de changement de vitesse électrique (36, 236) est agencé et configuré pour envoyer un signal électrique au contrôleur (24), lorsque l'élément d'actionnement (61, 261) est déplacé sur une distance prédéterminée dans la direction d'actionnement,
le contrôleur (24) est agencé et configuré pour initier l'un du changement de vitesse vers une vitesse supérieure et du changement de vitesse vers une vitesse inférieure du mécanisme de changement de vitesse de bicyclette, lorsque le signal électrique est reçu pendant une période de temps inférieure à un temps prédéterminé, et
le contrôleur (24) est agencé et configuré pour initier l'autre du changement de vitesse vers une vitesse supérieure et du changement de vitesse vers une vitesse inférieure du mécanisme de changement de vitesse de bicyclette, lorsque le signal électrique est reçu pendant une période de temps au moins aussi longue que le temps prédéterminé.

10. Composant d'actionnement de bicyclette selon la revendication 8, dans lequel
le commutateur de commande de changement de vitesse électrique (36, 236) est agencé et configuré pour envoyer un premier signal électrique au contrôleur (24), lorsque l'élément d'actionnement (61, 261) est déplacé le long d'une première course prédéterminée dans la direction d'actionnement, et
le commutateur de commande de changement de vitesse électrique (36, 236) est agencé et configuré pour envoyer un deuxième signal électrique au contrôleur (24), lorsque l'élément d'actionnement (61, 261) est déplacé le long de la deuxième course prédéterminée dans la direction d'actionnement.

11. Composant d'actionnement de bicyclette selon la revendication 10, dans lequel
le contrôleur (24) est agencé et configuré pour initier l'un du changement de vitesse vers une vitesse supérieure et du changement de vitesse vers une vitesse inférieure du mécanisme de changement de vitesse de bicyclette lorsque seulement le premier signal électrique est reçu pendant une période de temps prédéterminée, et
le contrôleur (24) est agencé et configuré pour initier l'autre du changement de vitesse vers une vitesse supérieure et du changement de vitesse vers une vitesse inférieure du mécanisme de changement de vitesse de bicyclette, lorsque le deuxième signal électrique est reçu pendant la période de temps prédéterminée.

12. Composant d'actionnement de bicyclette selon l'une quelconque des revendications 1 à 11, comprenant, en outre :
un support de levier de frein (30) configuré pour être attaché, sans possibilité de déplacement, à un guidon de bicyclette ; et
un levier de frein (32), couplé pivotant au support de levier de frein (30) ;
la partie de montage (60, 260) du commutateur de commande de changement de vitesse électrique (36, 236) étant attachée, sans possibilité de mouvement, au levier de frein (32) et/ou au support de levier de frein (30).
